# EUROPEAN PATENT APPLICATION

(11) **EP 2 384 052 A1**
(43) Date of publication of application: **02.11.2011**
(21) Application number: 10731190.4
(22) Date of filing: 06.01.2010
(51) Int. Cl.: H04W 36/18, H04W 36/38, H04W 72/04

(54) **MOBILE STATION APPARATUS, BASE STATION APPARATUS, HANDOFF METHOD, AND MOBILE COMMUNICATION SYSTEM**

(30) Priority: 16.01.2009 JP 2009007902
(71) Applicant: Sharp Kabushiki Kaisha, Osaka-shi, Osaka 545-8522 (JP)
(72) Inventor: UEMURA, Katsunari c/o Sharp Kabushiki Kaisha, Osaka-shi, Osaka 545-8522 (JP); OH, Waho c/o Sharp Kabushiki Kaisha, Osaka-shi, Osaka 545-8522 (JP)
(74) Representative: Müller - Hoffmann & Partner
(86) International application number: PCT/JP2010/050074
(87) International publication number: WO 2010/082521

(57) **Abstract**

A handover procedure is easily performed in a carrier aggregation state of receiving a plurality of frequency bands. There are provided a plurality of reception branches for performing a reception process for each frequency band, and a reception-signal processing control section 10 that performs control of switching a reception branch in operation to a reception branch which corresponds to the frequency band of a handover destination indicated by a handover command message that has been received from a base station apparatus and indicates a start of handover. Herein, handover is performed by stopping the reception branch that corresponds to the frequency band of a handover source indicated by the handover command message and operating the reception branch that corresponds to the frequency band of the handover destination indicated by the handover command message.

## Description

### Technical Field

The present invention relates to a technology for handover when a mobile station apparatus is simultaneously receiving a plurality of frequency bands.

### Background Art

Conventionally, in the 3rd Generation Partnership Project (3GPP), which is a group for standardization, it has been discussed on Evolved Universal Terrestrial Radio Access (hereinafter, referred to as 'EUTRA'), which has been evolved from the mobile communication system of third generation, and further on Advanced EUTRA (also called LTE-Advanced), which is further advanced from EUTRA (Non-Patent Document 1).

In Advanced EUTRA, Carrier Aggregation is proposed as a technology that enables data transmission with a higher speed while maintaining compatibility with EUTRA (for example, refer to Non-patent Document 2 and Non-Patent Document 3). Carrier Aggregation is a technology for improving the data rate by providing a reception device that includes one receiver having a reception band width exceeding the maximum transmission bandwidth of a transmission device, or a plurality of receivers having the reception band width equal to the maximum transmission band width of the transmission device and by respectively receiving data of the transmission device transmitted in a plurality of different frequency bands by a receiver/receivers for different frequency bands in the reception device. Hereinafter, a reception device and a transmission device for downlink transmission will be respectively described as a mobile station apparatus and a base station apparatus, while a reception device and a transmission device for uplink transmission will be respectively described as a base station apparatus and a mobile station apparatus. However, it is not necessary to limit the scope of application of the present invention to these devices.

Herein, in order to measure the reception quality of a signal transmitted from a base station apparatus and sequentially switches to a base station apparatus for a better quality than that of the base station apparatus in current communication, a mobile station apparatus in communication needs to perform a handover procedure (sections 5.3 and 5.4 of Non-Patent Document 4). Further, even a mobile station apparatus in Carrier Aggregation is considered to need the handover procedure in a view of continuous communication. In W-CDMA (Wideband-Code Division Multiple Access), which is a mobile communication system of third generation, a handover procedure in a state that a mobile station apparatus is simultaneously receiving transmission signals (Radio Links) from a plurality of base station apparatuses (section 8.3.5 of Non-Patent Document 5).

### Citation List

### Non-Patent Literature

Non-Patent Document 1: 3GPP TR36.913, Requirements for Further Advancements for E-UTRA.V8.0.0 http://www.3gpp.org/ftp/Specs/html-info/36913.htm
Non-Patent Document 2: Motorola, R1-083821, 3GPP TSG-RAN1 Meeting #54 bis, Prague, Czech Republic, Sep 29-Oct 3, 2008
Non-Patent Document 3: NTT DoCoMo, R1-083677, 3GPP TSG-RAN1 Meeting #54 bis, Prague, Czech Republic, Sep 29-Oct 3,2008
Non-Patent Document 4: 3GPP TS36.331, Radio Resource Control(RRC); Protocol specification. V8.4.0 http://www.3gpp.org/ftp/Specs/html-info/36331.htm
Non-Patent Document 5: 3GPP TS25.331, Radio Resource Control(RRC); Protocol specification. V8.5.0 http://www.3gpp.org/ftp/Specs/html-info/25331.htm

### Disclosure of the Invention

### Problem to be Solved by the Invention

However, no discussion has been made so far on the handover procedure of a mobile station apparatus based on Advance EUTRA (hereinafter, referred to merely as 'mobile station apparatus'). Particularly, when a mobile station apparatus is receiving a plurality of frequency bands (also called Component Carrier or Carrier Component), nothing has been disclosed at all in Non-Patent Documents 1 to 4 about a method for specifying a component carrier changed by handover. Further, as component carriers exist in different frequency bands, respectively, the structure is different from that of a plurality of Radio Links based on W-CDMA, such as described in Non-Patent document 5. Accordingly, a same handover procedure cannot be used.

The present invention has been made in view of the above circumstances, and has an object to provide a mobile station apparatus, a base station apparatus, a handover method, and a mobile communication system that make it possible to easily perform a handover procedure in a state of carrier aggregation where a plurality of frequency bands is being received.

### Summary of Invention

### Means for Solving the Problem

(1) In order to attain the above-described object, the following means has been devised according to the present invention. That is, a mobile station apparatus according to the invention is a mobile station apparatus that receives transmission signals in a plurality of frequency bands which are transmitted from one or more base station apparatus/apparatuses and are different from each other, the mobile station apparatus including: a plurality of reception branches that performs a reception process for each of the frequency bands; and a reception-signal processing control section that performs control of switching a reception branch in operation to a reception branch that corresponds to a frequency band of a handover destination indicated by a handover command message that has been received from the base station apparatus and indicates a start of handover, wherein the mobile station apparatus performs handover by: stopping a reception branch that corresponds to a frequency band of a handover source indicated by the handover command message; and operating the reception branch that corresponds to the frequency band of the handover destination indicated by the handover command message.

As described above, the reception branch in operation is switched to a reception branch that corresponds to the frequency band to be received which is indicated by a handover command message having been received from a base station apparatus and indicating a start of handover. Thus, efficient handover can be realized in a state of receiving a plurality of frequency bands. For example, when a mobile station apparatus is receiving a plurality of frequency bands by carrier aggregation, it is possible to perform control, distinguishing measurement reports on carrier aggregation from other measurement reports. Thus, it is unnecessary to transmit unnecessary measurement results to the base station apparatus, and effective utilization of uplink transmission resources is thereby attained.

(2) Further, the mobile station apparatus according to the present invention determines that a frequency band which corresponds to a reception branch having received the handover command message is the frequency band of the handover source.

As described above, the mobile station apparatus determines that the frequency band which corresponds to the reception branch having received the handover command message is the frequency band of a handover source. Accordingly, when the mobile station apparatus is receiving a plurality of frequency bands by carrier aggregation, it is possible to clearly recognize the frequency band of a handover source.

(3) Still further, based on the handover command message, the mobile station apparatus according to the present invention determines that one of the frequency bands other than the frequency band which corresponds to the reception branch having received the handover command message is the frequency band of the handover source.

As described above, based on the handover command message, the mobile station apparatus determines that one of the frequency bands other than the frequency band which corresponds to the reception branch having received the handover command message is the frequency band of a handover source. Accordingly, it is possible to improve the probability of reception success of a handover command message and the probability of handover success. That is, a fact that a handover has been instructed means that the corresponding frequency band has a comparatively low reception quality, and accordingly, the probability of reception failure of a handover command message is also high in this frequency band. In this situation, for example, by transmitting a handover command message in another frequency band in carrier aggregation, it is possible to improve the probability of reception success of a handover command message and the probability of handover success.

(4) Yet further, the mobile station apparatus according to the present invention transmits a handover complete message indicating completion of handover, in a frequency band indicated by the handover command message.

As described above, a handover complete message indicating completion of handover is transmitted in a frequency band indicated by the handover command message. Accordingly, the probability of transmitting a handover complete message is improved, and as a result, it is possible to improve the probability of handover success.

(5) Further, the mobile station apparatus according to the present invention transmits a handover complete message indicating completion of handover, in a frequency band indicated by control information included in a response of a random access channel.

The handover complete message indicating completion of handover is transmitted in a frequency band indicated by control information included in a response of a random access channel. Accordingly, the probability of transmitting a handover complete message is improved, and as a result, it is possible to improve the probability of handover success.

(6) Still further, the mobile station apparatus according to the present invention determines that a frequency band where all of the reception branches are receiving a transmission signal is a frequency band of a handover source.

As described above, the mobile station apparatus determines that a frequency band where all of the reception branches are receiving a transmission signal is the frequency band of a handover source. Accordingly, it is possible to simplify a handover procedure.

(7) Yet further, based on the handover command message, the mobile station apparatus according to the present invention determines whether transmission of a random access channel is necessary at handover, and as a result of the determination, if transmission of a random access channel is unnecessary, then the mobile station apparatus performs handover, omitting a random access procedure, and if transmission of a random access channel is necessary, then the mobile station apparatus performs handover with a random access procedure.

As described above, based on the handover command message, the mobile station apparatus determines whether transmission of a random access channel is necessary at handover. As a result of the determination, if transmission of a random access channel is unnecessary, then the mobile station apparatus performs handover, omitting a random access procedure. On the other hand, if transmission of a random access channel is necessary, then the mobile station apparatus performs handover with a random access procedure. Accordingly, when it is unnecessary to transmit a random access channel for establishing uplink synchronization, it is possible to omit a random access procedure. It is thereby possible to shorten the processing time necessary for a handover procedure. As a result, momentary interruption of communication can be reduced, and the communication quality can be improved. Further, by omitting a random access procedure, the power consumption necessary at handover can be reduced.

(8) Further, a base station apparatus according to the present invention performs radio communication with a mobile station apparatus that receives transmission signals in a plurality of frequency bands different from each other, wherein the base station apparatus transmits, to a mobile station apparatus having transmitted a measurement report message indicating that a handover condition has been satisfied, a handover command message which indicates a start of handover and which includes control information specifying a downlink frequency band of a handover destination and control information specifying an uplink frequency band for transmitting a handover complete message that notifies completion of handover.

As described above, the base station apparatus transmits a handover command message which indicates a start of handover and which includes control information specifying a downlink frequency band of a handover destination and control information specifying an uplink frequency band for transmitting a handover complete message that notifies completion of handover. Accordingly, even if the mobile station apparatus is receiving a plurality of frequency bands in a carrier aggregation state, as it is unnecessary to have a handover command message include information on the carrier component that stops reception after handover, it is possible to reduce the information amount of signaling. Further, by specifying, from the base station apparatus, a carrier component for transmitting a handover complete message, it is possible to improve the probability of transmission success of the handover complete message and the probability of handover success.

(9) Still further, the base station apparatus according to the present invention determines whether or not a random access procedure is necessary for the mobile station apparatus having transmitted the measurement report message indicating that a handover condition has been satisfied, and, based on the determination, transmits, to the mobile station apparatus, the handover command message which indicates a start of handover and which includes control information specifying whether or not the random access procedure is necessary.

As described above, the base station apparatus determines whether or not a random access procedure is necessary for the mobile station apparatus having transmitted the measurement report message indicating that a handover condition has been satisfied, and, based on the determination, transmits, to the mobile station apparatus, the handover command message which indicates a start of handover and which includes control information specifying whether or not the random access procedure is necessary. Accordingly, when it is not necessary to transmit a random access channel for establishment of uplink synchronization, it is possible to omit a random access procedure, and to shorten the processing time necessary for a handover procedure. As a result, momentary interruption of communication can be reduced and the communication quality can be improved. Further, the mobile station apparatus can reduce the power consumption necessary at handover because of omission of a random access procedure.

(10) Yet further, the base station apparatus according to the present invention notifies the mobile station apparatus of unnecessity of a random access procedure, by having the handover command message include a random access unnecessity identifier.

As described above, the base station apparatus notifies the mobile station apparatus of unnecessity of a random access procedure, by having the handover command message include a random access unnecessity identifier. Accordingly, it is possible for the mobile station apparatus to omit a random access procedure and perform fast handover.

(11) Further, the base station apparatus according to the present invention reserves a part of dedicated preamble numbers, specifies the dedicated preamble number by the handover command message, and thereby notifies the mobile station apparatus of unnecessity of a random access procedure.

As described above, the base station apparatus reserves a part of dedicated preamble numbers, specifies the dedicated preamble number by the handover command message, and thereby notifies the mobile station apparatus of unnecessity of a random access procedure. Accordingly, the mobile station apparatus can omit a random access procedure and perform fast handover.

(12) Still further, the base station apparatus according to the present invention has the handover command message include the same frequency identifier as a frequency identifier allocated to a downlink frequency band that the mobile station apparatus is receiving, and thereby notifies the mobile station apparatus of unnecessity of a random access procedure.

As described above, the base station apparatus has the handover command message include the same frequency identifier as a frequency identifier allocated to a downlink frequency band that the mobile station apparatus is receiving, and thereby notifies the mobile station apparatus of unnecessity of a random access procedure. Accordingly, the mobile station apparatus can omit a random access procedure and perform fast handover.

(13) Yet further, the base station apparatus according to the present invention has the handover command message include the same mobile station apparatus ID as a mobile station apparatus ID that the mobile station apparatus is using, and thereby notifies the mobile station apparatus of unnecessity of a random access procedure.

As described above, the base station apparatus has the handover command message include the same mobile station apparatus ID as a mobile station apparatus ID that the mobile station apparatus is using, and thereby notifies the mobile station apparatus of unnecessity of a random access procedure. Accordingly, the mobile station apparatus can omit a random access procedure and perform fast handover.

(14) Further, the base station apparatus according to the present invention specifies, by the handover command message, the same uplink frequency band as one of uplink frequency bands that the mobile station apparatus has been accessing before the handover, and thereby notifies the mobile station apparatus of unnecessity of a random access procedure.

As described above, the base station apparatus specifies, by the handover command message, the same uplink frequency band as one of uplink frequency bands that the mobile station apparatus has been accessing before the handover, and thereby notifies the mobile station apparatus of unnecessity of a random access procedure. Accordingly, the mobile station apparatus can omit a random access procedure and perform fast handover.

(15) Still further, a handover method, according to the present invention, for a mobile station apparatus that receives transmission signals in a plurality of frequency bands which are transmitted from one or more base station apparatus/apparatuses and are different from each other, the method comprising the steps of: performing control of switching a reception branch in operation among a plurality of reception branches that performs a reception process for each of the frequency bands, to a reception branch that corresponds to a frequency band of a handover destination indicated by a handover command message that has been received from the base station apparatus and indicates a start of handover; stopping the reception branch that corresponds to the frequency band of the handover destination indicated by the handover command message; and operating the reception branch that corresponds to the frequency band of the handover destination indicated by the handover command message to thereby perform handover.

As described above, a reception branch in operation is switched to a reception branch that corresponds to a frequency band to be received, the frequency band being indicated by a handover command message that has been received from a base station apparatus and indicates a start of handover. Accordingly, efficient handover can be realized in a state of receiving a plurality of frequency bands. For example, when a mobile station apparatus is receiving a plurality of frequency bands by carrier aggregation, it is possible to perform control, distinguishing measurement reports on carrier aggregation from other measurement reports. Thus, it is not necessary to transmit unnecessary measurement results to the base station apparatus, and effective utilization of uplink transmission resources is thereby attained.

(16) Yet further, a mobile communication system according to the present invention includes: the mobile station apparatus according to the above-described item (1); and the base station apparatus according to the above-described item (8).

With this arrangement, as described above, a reception branch in operation is switched to a reception branch that corresponds to a frequency band to be received, the frequency band being indicated by a handover command message that has been received from a base station apparatus and indicates a start of handover. Accordingly, efficient handover can be realized in a state of receiving a plurality of frequency bands. For example, when a mobile station apparatus is receiving a plurality of frequency bands by carrier aggregation, it is possible to perform control, distinguishing measurement reports on carrier aggregation from other measurement reports. Thus, it is unnecessary to transmit unnecessary measurement results to the base station apparatus, and effective utilization of uplink transmission resources is thereby attained.

### Advantage of the Invention

According to the present invention, efficient handover can be realized in a state of receiving a plurality of frequency bands.

### Brief Description of the Drawings

FIG. 1A is a block diagram showing an example of a configuration of a mobile station apparatus in a first embodiment of the present invention.
FIG. 1B is a diagram showing a relationship between carrier aggregation and frequency bandwidths in the first embodiment of the present invention.
FIG. 1C is a diagram showing detailed configurations of a radio reception section, an orthogonal demodulator, and a baseband demodulation section of the mobile station apparatus in the first embodiment of the present invention.
FIG. 1D is a diagram showing the detailed configurations of a radio transmission section, an orthogonal modulator, and a baseband modulation section of the mobile station apparatus in the first embodiment of the present invention.
FIG. 2 is a block diagram showing an example of a reception device of a base station apparatus in the first embodiment of the present invention.
FIG. 3 is a block diagram showing an example of a transmission device of the base station apparatus in the first embodiment of the present invention.
FIG. 4A is a diagram showing a network configuration in the first embodiment of the present invention.
FIG. 4B is a diagram showing another network configuration in the first embodiment of the present invention.
FIG. 5 is a diagram showing a correspondence relationship between downlink carrier components and uplink carrier components in the first embodiment of the present invention.
FIG. 6 is a sequence chart showing a handover carrier component determination procedure of the base station apparatus in the first embodiment of the present invention.
FIG. 7 is a sequence chart showing a handover processing procedure of the mobile station apparatus in the first embodiment of the present invention.
FIG. 8 is a sequence chart showing another handover processing procedure of the mobile station apparatus in the first embodiment of the present invention.
FIG. 9 is a flowchart showing a processing procedure of a handover carrier component determination process of the base station apparatus in the first embodiment of the present invention.
FIG. 10 is a flowchart showing a processing procedure of a handover process of the mobile station apparatus in the first embodiment of the present invention.
FIG. 11 is a sequence chart showing a handover carrier component determination procedure of a base station apparatus in a second embodiment of the present invention.
FIG. 12 is a sequence chart showing a handover processing procedure of a mobile station apparatus in the second embodiment of the present invention.
FIG. 13 is a sequence chart showing another handover processing procedure of the mobile station apparatus in the second embodiment of the present invention.
FIG. 14 is a flowchart showing a processing procedure of a message transmitting carrier component determination process of the base station apparatus in the second embodiment of the present invention.
FIG. 15 is a flowchart showing a processing procedure of a handover process 2 of the mobile station apparatus in the second embodiment of the present invention.
FIG. 16 is a sequence chart showing a handover processing procedure of a mobile station apparatus in a third embodiment of the present invention.
FIG. 17 is a flowchart showing a processing procedure of a handover process 3 of the mobile station apparatus in the third embodiment of the present invention.
FIG. 18 is a sequence chart showing a handover processing procedure of a mobile station apparatus in a fourth embodiment of the present invention.
FIG. 19 is a flowchart showing a processing procedure of a handover process 4 of the mobile station apparatus in the fourth embodiment of the present invention.
FIG. 20 is a flowchart showing another processing procedure of the handover process 4 of the mobile station apparatus in the fourth embodiment of the present invention.
FIG. 21 is a sequence chart showing a hard handover procedure in a W-CDMA system.
FIG. 22 is a sequence chart showing a soft handover procedure in a W-CDMA system.
FIG, 23 is a sequence chart showing a handover procedure in EUTRA.
FIG. 24 is a diagram showing a state of increase and decrease in receiving frequency bands using carrier aggregation.

### Best Modes for Carrying Out the Invention

Embodiments of the present invention will be described below, referring to the drawings. First, a technology that is the base of the embodiments according to the present invention will be described.

### (1) Handover Procedure (Soft Handover, Hard Handover)

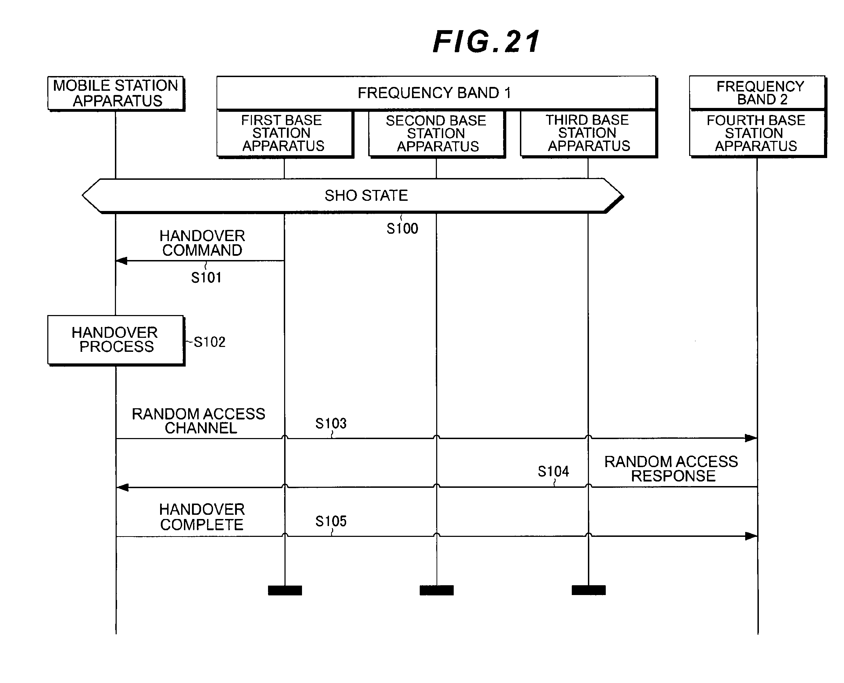

FIG. 21 is a sequence chart showing a hard handover procedure in a conventional W-CDMA system. FIG. 21 shows a mobile station apparatus, a first to a third base station apparatus that use a frequency band 1, and a fourth base station apparatus that uses a frequency band 2. Note that the first to third base station apparatuses may be different base station apparatuses, and may be different transmission devices of the same base station apparatus.

Herein, in a state (soft handover state, SHO state) of simultaneously receiving transmission signals from the first to third base station apparatuses (step S100), the mobile station apparatus is notified of a handover command message from the first base station apparatus (step S101). Incidentally, the handover command message may be notified from the second or third base station apparatus. If handover to the fourth base station apparatus is instructed by the handover command message, the mobile station apparatus performs a handover process (step S102). In the handover process, preparation related to the handover process is carried out, based on information (handover destination base station information, handover timing, etc.) included in the handover command message. Then, at a handover timing notified by the handover command message (There is also a case of immediate execution.), reception of transmission signals from the first to third base station apparatuses is stopped, and the receiving frequency band is switched to a frequency band 2.

The mobile station apparatus establishes downlink synchronization, based on a transmission signal from the fourth base station apparatus, and transmits a random access channel, thereby trying to obtain uplink synchronization (step S103). The fourth base station apparatus having received the random access channel transmits a random access response (step S104). The mobile station apparatus having succeeded in normally receiving the random access response subsequently transmits a handover complete message to the fourth base station apparatus and completes the handover procedure (step S105). Note that it is also possible to have the handover command message including a plurality of base station apparatuses, and in this case, it is possible for the mobile station apparatus to enter the SHO state immediately after the completion of handover.

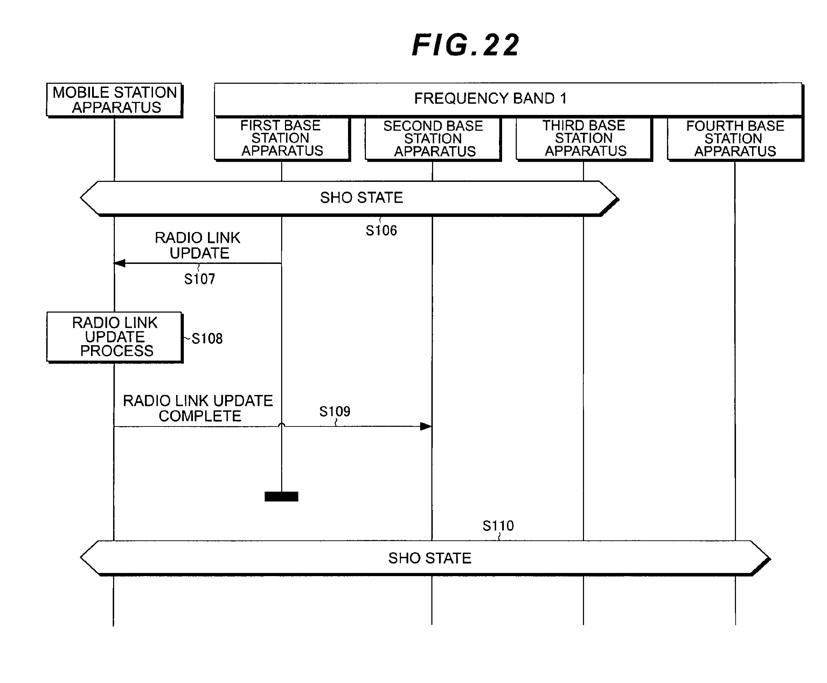

FIG. 22 is a sequence chart showing a soft handover procedure in a conventional W-CDMA system. FIG. 22 shows the mobile station apparatus and the first to fourth base station apparatuses that use the frequency band 1. The first to fourth base station apparatuses may be different base station apparatuses and may be transmission devices in the same base station apparatus. Herein, in a state of simultaneously receiving transmission signals from the first to third base station apparatuses (soft handover state, SHO state) (step S106), the mobile station apparatus is notified of a radio link update message (active set update message) from the first base station apparatus (step 5107). Incidentally, the mobile station apparatus may be notified of the radio link update message from the second or third base station apparatus. For example, when the radio link update message instructs to stop transmission signals from the first base station apparatus and newly receive transmission signals from the fourth base station apparatus, the mobile station apparatus performs a radio link update process (Step 5108).

In the radio link update process, on the basis of information (base station apparatus information for starting and stopping reception, radio link update timing, etc.) included in the radio link update message, preparation related to the radio link update process is performed. Then, at a radio link update timing (possibly immediate execution) notified by the radio link update message, reception of transmission signals from the first base station apparatus is stopped, reception of transmission signals from the fourth base station apparatus is started, and the SHO state is updated. Transmission of a random access channel is not necessary.

Finally, a radio link update complete message is transmitted to the second base station apparatus, and the radio link update procedure is completed (step S109). Then, the mobile station apparatus, and the second, third and fourth base station apparatuses enter an SHO state (step S110). Although the radio link update complete message is transmitted to the second base station apparatus in the figure, the radio link update complete message may be practically received by any of the second to fourth base station apparatuses, which enter the SHO state, and does not always need to be transmitted to the second base station apparatus.

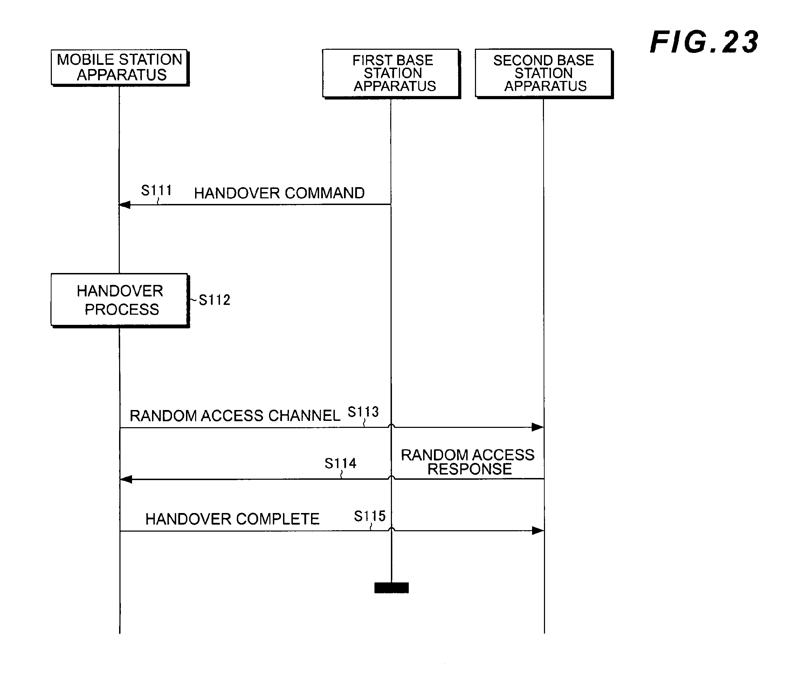

FIG. 23 is a sequence chart showing a handover procedure in EUTRA. FIG. 23 shows a control by which the mobile station apparatus starts from a state of communication with the first base station apparatus, which is the cell of a handover source and performs handover to the second base station apparatus, which is the cell of a handover destination. Herein, the first and second base station apparatuses may be different base station apparatuses, and may be different transmission devices in the same base station apparatus.

The first base station apparatus, when having determined that handover is necessary for continuation of communication, notifies the mobile station apparatus of a downlink resource allocation message and a handover command message as well (step S111). Herein, resource refers to information on the transmission frequency band, the transmission time, the modulation system, the signal sequence, and the like. A handover process is performed upon receipt of the massages by the mobile station apparatus (step S112). In the handover process, preparation related to the handover process is performed, based on information (handover destination base station information, random access information, etc.) included in the handover command message.

Then, after receiving the handover command message, the mobile station apparatus switches control parameters of the radio frequency, and the transmission/reception circuits as necessary, and performs a downlink synchronization establishment process for establishment of downlink radio synchronization with the second base station apparatus. The parameters for the downlink synchronization establishment process are included in the above-described handover command message, or broadcasted or notified by the first base station apparatus in advance. The mobile station apparatus having completed the downlink synchronization establishment transmits a random access channel for uplink synchronization establishment with the second base station apparatus (step S113).

Normally, a (contention-based) channel, which possibly causes contention, is used for random access. However, in order to realize a (contention-free) random access channel, which does not cause contention, a dedicated preamble sequence is assigned to each mobile station apparatus in advance by the above-described handover command message. The present mobile station apparatus transmits a random access channel, using a dedicated preamble sequence specified by the handover command message. The second base station apparatus having received the dedicated preamble sequence determines that handover of the mobile station apparatus is completed, and notifies uplink synchronization information for adjusting the uplink transmission timing and uplink resource allocation information for transmitting a handover complete message, in random access response (step S114). The mobile station apparatus adjusts the uplink transmission timing, based on the information, transmits the handover complete message using a specified uplink resource, and completes the handover (step S115).

### (2) Carrier Aggregation

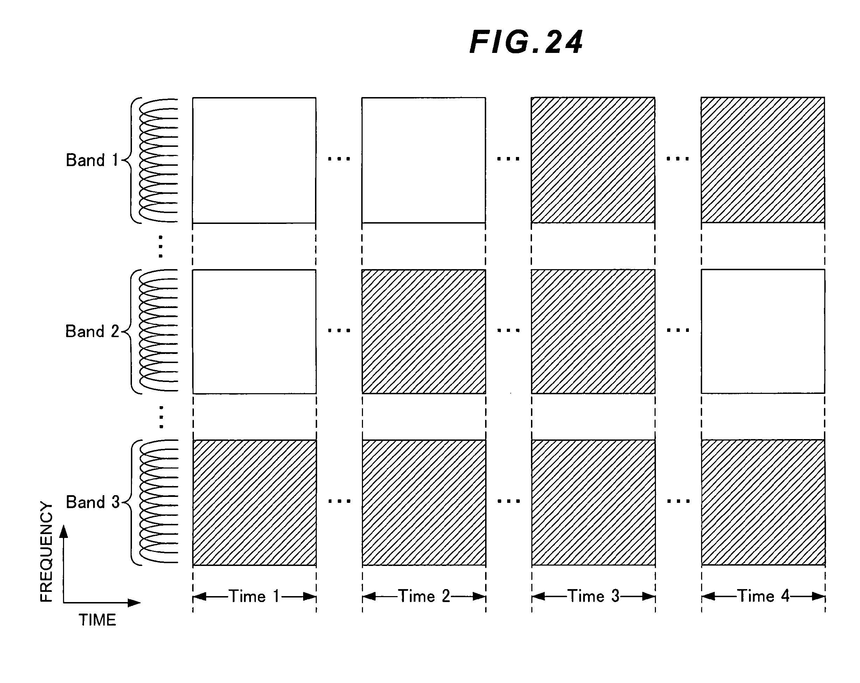

FIG. 24 is a diagram showing a state of increase and decrease in receiving frequency bands using carrier aggregation. Band 1 to Band 3 respectively represent downlink frequency bands for transmission by base station apparatuses, wherein the transmission bandwidth is, for example, 20 MHz. Incidentally, Band 1 to Band 3 may be a continuous frequency band, or may be frequency bands that are entirely or partially discontinuous. However, the mobile station apparatus needs to have a receiving bandwidth of 20 MHz or more. In the present example, up to three frequency bands of 20 MHz can be simultaneously received, and the total of the receiving bandwidths is 60 MHz.

In the example in FIG. 24, the mobile station apparatus is communicating with a base station apparatus in a predetermined time period Time 1 using 20 MHz of Band 3, while simultaneously measuring the reception quality of Band 1 and Band 2. In another time period Time 2, Band 2 is added, and the mobile station apparatus is communicating with the base station apparatus using total 40 MHz of Band 2 and Band 3, while simultaneously measuring the reception quality of Band 1. In still another time period Time 3, Band 1 is added, and the mobile station apparatus is communicating with the base station apparatus using total 60 MHz of Band 1 to Band 3. In yet another time period Time 4, Band 2 is deleted, and the mobile station apparatus is communicating with the base station apparatus using total 40 MHz of Band 1 and Band 3, while simultaneously measuring the reception quality of Band 2.

In such a manner, by using carrier aggregation, the data rate can be significantly improved without greatly changing the configuration of a base station apparatus. Incidentally, the lengths of time periods of Time 1 to Time 4 are variable. In a case of using OFDMA (orthogonal frequency division multiplexing access) as a communication system, the OFDM symbol timings of the respective frequency bands in carrier aggregation need to be equal. The fact that OFDM timings are equal means that the deviation between the receiving timings of the OFDM symbols of the respective frequency bands at the receiving antenna end of the mobile station apparatus falls within a guard time. Regarding Bands, for example, when usable frequency bands are 800 MHz band, 2.4 GHz band, and 3.4 GHz band, bands which are Band 1, Band 2, and Band 3 may be transmitted by any 20 MHz downlink component carriers in 800 MHZ band, 2.4 GHz band, and 3.4 GHz band, respectively. Further, they may be transmitted by a plurality of 20 MHz downlink component carriers, which are continuous or discontinuous in the same frequency band, for example, in 2.4 GHz band. The number of bands may be three or more. The frequency bandwidth of each band may be narrower than 20 MHz.

### (3) Physical Channel

Physical channels used for EUTRA and Advanced EUTRA include a physical broadcast information channel, an uplink data channel, a downlink data channel, a downlink shared control channel, an uplink shared control channel, a random access channel, a synchronization signal, a downlink reference signal, an uplink reference signal, and the like.

For EUTRA and Advanced EUTRA, it is possible that more physical channels will be added later, or the channel structure of the physical channels will be changed, but the descriptions in the respective embodiments of the present invention will not be affected even when a change is made. The physical broadcast information channel (PBCH: physical broadcast channel) is transmitted for the purpose of notifying a control parameter (broadcast information) commonly used by mobile station apparatuses in a cell. Regarding broadcast information which is not notified by the physical broadcast channel, a transmission resource is notified by the downlink shared control channel, and the broadcast information is transmitted using the downlink data channel. The broadcast information includes a cell global ID unique to a system, uplink frequency band information, and the like.

The downlink reference signal is a pilot signal that is transmitted with predetermined power for each cell. A downlink reference signal is a signal periodically repeated at a predetermined time interval (for example, one frame), wherein a mobile station apparatus receives the downlink reference signal at the predetermined time interval and measures the reception quality to determine the reception quality for each cell. Further, the downlink reference signal is used as a reference signal for demodulation of downlink data that is transmitted simultaneously with the downlink reference signal. The sequence used for the downlink reference signal can be an arbitrary sequence as long as identifiable uniquely to each cell. Incidentally, a downlink reference signal is sometimes described as DL-RS (downlink reference signal), and the usage purpose and the meaning thereof are the same.

The downlink shared control channel (PDCCH: physical downlink common channel) is transmitted with several front symbols of each sub-frame, and used for the purpose of resource allocation information to a mobile station apparatus according to the scheduling of a base station apparatus and instruction of adjusting amount of the transmission power. A mobile station apparatus needs to receive the downlink shared control channel before transmission/reception of traffic data (user data) and a control message, and obtain information on uplink resource allocation at the time of transmission and information on downlink resource allocation at the time of reception.

The random access channel (PRACH: physical random access channel) is a channel used for transmission of a preamble sequence, and has a guard time. The random access channel is used as an access procedure in the asynchronous state of the uplink transmission timing, and used for a resource request and adjustment of the uplink transmission timing. Incidentally, the other physical channels are not related to the respective embodiments of the present invention, and detailed description thereof will be accordingly omitted.

### First Embodiment

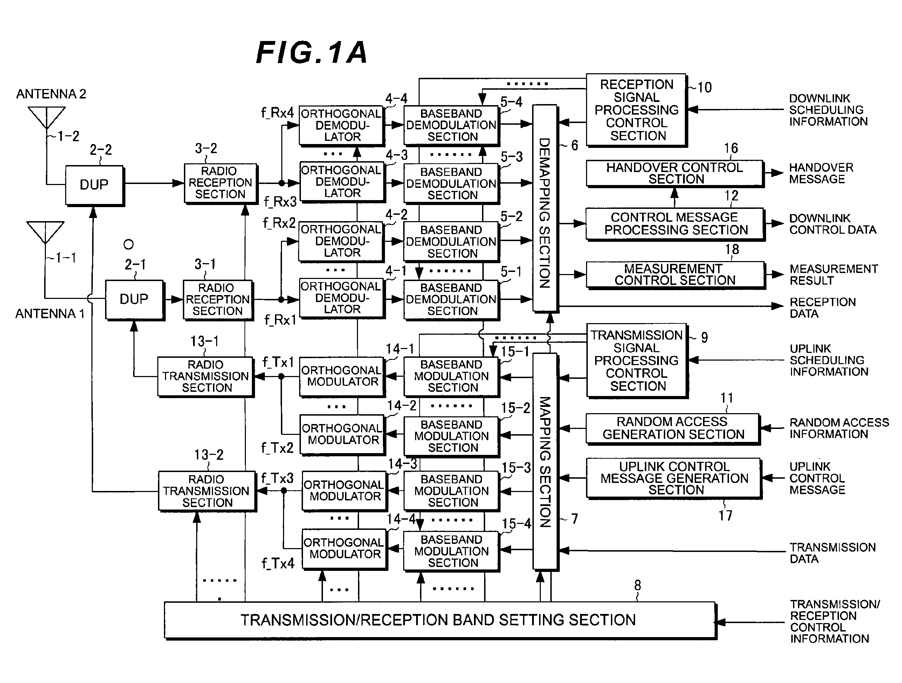

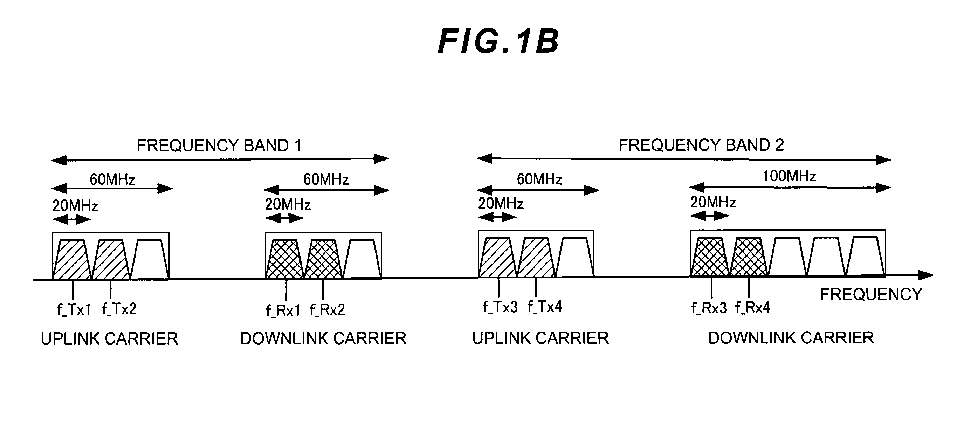

A first embodiment of the present invention will be described below. FIG. 1A is a block diagram showing an example of a configuration of a mobile station apparatus according to a first embodiment of the present invention. FIG. 1B is a diagram showing carrier aggregation assumed in the present embodiment. The mobile station apparatus includes a plurality of transmission/reception sections depending on corresponding frequency bands (for example, an 800 MHz band, a 2.4 4 GHz band, and a 3.4 GHz band). FIG. 1A shows the configuration of the mobile station apparatus that can support carrier aggregation shown in FIG. 1B.

A reception section corresponding to the frequency band 1 includes a receiving antenna 1-1, a transmission/reception antenna sharing unit DUP 2-1, a radio reception section 3-1, an orthogonal demodulator 4-1 corresponding to a downlink component carrier center frequency f_Rx1, a baseband demodulation section 5-1, an orthogonal demodulator 4-2 corresponding to a downlink component carrier center frequency f_Rx2, and a baseband demodulation section 5-2. Further, a reception section corresponding to the frequency band 2 includes a receiving antenna 1-2, a transmission/reception antenna sharing unit DUP 2-2, a radio reception section 3-2, an orthogonal demodulator 4-3 corresponding to a downlink component carrier center frequency f_Rx3, a baseband demodulation section 5-3, an orthogonal demodulator 4-4 corresponding to a downlink component carrier center frequency f_Rx4, and a baseband demodulation section 5-4. Further, as common sections, there are provided a demapping section 6, a transmission/reception band setting section 8, a reception signal processing control section 10, a control message processing section 12, a measurement processing section 18, and a handover control section 16.

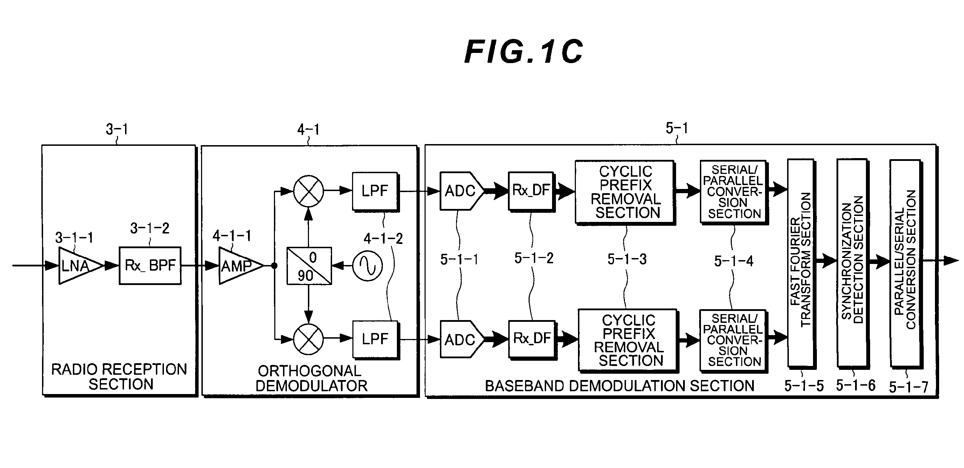

With a direct conversion system taken as an example, FIG. 1C shows detailed configurations of a radio reception section, an orthogonal demodulator, and a baseband demodulation section. FIG. 1A shows a case where these sections are present in respective plural numbers, and all of these have the similar configurations. Incidentally, other reception systems, such as a super-heterodyne system, may be applied. Taking reception of one downlink component carrier signal into account, the reception section includes a radio reception section, an orthogonal demodulator, and a baseband demodulation section. For example, a downlink component carrier signal with the center frequency f_Rx1 and with a frequency bandwidth of 20 MHz is transmitted from a base station apparatus, and received by the receiving antenna 1-1, an LNA (low noise amplifier) 3-1-1, an RF reception band limiting filter Rx_BPF (for example, a filter with a 60 MHz pass-band with a center of 2.4 GHz reception band) 3-1-2.

The downlink component carrier signal with the center frequency f_Rx1 is input to the baseband demodulation section via the orthogonal demodulator 4-1 including an AMP 4-1-1, an LPF 4-1-2, and the like; an analog signal is converted into a digital signal by an ADC (analog to digital converter) section 5-1-1a; and an OFDM demodulation signal is generated via a reception band limiting digital filter Rx_DF (for example, a downlink component carrier signal band) 5-1-2, a cyclic prefix removing section 5-1-3, a serial/parallel conversion section 5-1-4, a fast Fourier transform section 5-1-5, a synchronization detection section 5-1-6, and a parallel/serial conversion section 5-1-7.

FIG 1A shows an example where the number of receiving antennas is equal to the number of frequency bands of the downlink component carriers shown in FIG. 1B and the number of radio reception sections is equal to the number of the center frequencies of the downlink component carriers. However, the configuration of a mobile station apparatus may be such that a part or all of the receiving antenna or the radio reception section are made common due to wider-band and higher-performance of the radio device, and further may be such that the number of receiving antennas and the number of radio reception sections are larger than the number of downlink component carriers.

Herein, for generalization, one downlink component carrier reception branch is defined for each downlink component carrier corresponding to carrier aggregation. For example, the reception branch f_Rx1, which is the reception branch for the downlink component carrier f_Rx1, includes the receiving antenna 1-1, the transmitting/receiving antenna sharing unit DUP 2-1, the radio reception section 3-1, the orthogonal demodulator 4-1, and the baseband demodulation section 5-1. ON-OFF control of a reception branch means that it controls whether or not to receive a corresponding downlink component carrier, and turns-on or turns-off a part or all of the functions of the devices of the reception branch, depending on the hardware configuration and the device configuration. For example, in the case of FIG. 1A, turning-off the reception branch f_Rx1 means that it stops a part or all of the functions of the orthogonal demodulator 4-1 and the baseband demodulation section 5-1 to reduce the power consumption. Turning-off the reception branches f_Rx3 and f_Rx4 means that it stops a part or all of the functions of the orthogonal demodulators 4-3 and 4-4, the baseband demodulation sections 5-3 and 5-4, and the radio reception section 3-2 to reduce the power consumption.

Reception signals (transmission signals from a base station apparatus) of the downlink component carriers f_Rx1 and f_Rx2 are received by the corresponding reception branches f_Rx1 and f_Rx2 via the receiving antenna 1-1. The number of reception branches is equal to the number of frequency bands which can be simultaneously received by the present mobile station apparatus, namely the number of the downlink component carriers.

Transmission/reception control information is input to the transmission/reception band setting section 8. The transmission/reception control information includes a frequency band (for example, the 2.4 GHz band), a downlink component carrier center frequency (for example, f_Rx1 and f_Rx2), a downlink component carrier bandwidth (for example, 20 MHz), and in addition, information on receiving timings, a multiplexing method, resource allocation information, and the like related to respective channels. The transmission/reception band setting section 8 sets the receiving frequency bands, the downlink component carrier center frequencies, and the downlink component carrier bandwidths for the respective reception branches. According to the transmission/reception control information, the reception branches receive downlink component carrier signals having been set, and the signals are separated by the demapping section 6.

Downlink scheduling information is input to the reception signal processing control section 10. The downlink scheduling information includes demodulation information on reception signals and the like. The reception signal processing control section 10 sets downlink scheduling information to the baseband demodulation sections 5-1 to 5-4 of the respective reception branches, and the baseband demodulation sections 5-1 to 5-4 of the reception branches perform demodulation of the respective downlink component carrier reception signals. The downlink component carrier reception signals after the demodulation go through the demapping section 6 and are input to the control message processing section 12 if they are downlink messages (layer 3 message) from an upper layer. Further, a result related to measurement information is input to the measurement processing section 18.

Information other than measurement information from which signals are separated by the demapping section 6, for example such as reception data which is a user's traffic data and downlink control data on a lower layer, is input to individual processing blocks as other information. However, these kinds of information are not related to the present embodiment, and description thereof will be accordingly omitted.

A downlink control message is input from the base station apparatus to the control message processing section 12. The control message processing section 12 performs control processing corresponding to the content of the downlink control message, and notifies an upper layer of a result of the control processing as downlink control data. If the downlink control message is a message (handover command message) related to handover, the message is transmitted to the handover control section 16.

The handover control section 16 extracts information (broadcast information on the handover destination, uplink/downlink channel information, etc.), which is used in performing the handover procedure, from the handover command message, and notifies the upper layer of the information as a handover message. The measurement processing section 18 performs a process of time-averaging, a process of determining the reception quality, etc. on the measurement result, and notifies the upper layer of an obtained result as a measurement result.

The transmission section of the mobile station apparatus in the first embodiment of the present invention will be described below. The transmission section corresponding to the frequency band 1 includes the transmitting antenna 1-1, the transmission/reception antenna sharing unit DUP 2-1, a radio transmission section 13-1, an orthogonal modulator 14-1 corresponding to an uplink component carrier center frequency f_Tx1, a baseband modulation section 15-1, an orthogonal modulator 14-2 corresponding to an uplink component carrier center frequency f_Tx2, and a baseband modulation section 15-2. Further, a transmission section corresponding to the frequency band 2 includes the receiving antenna 1-2, the transmission/reception antenna sharing unit DUP 2-2, a radio transmission section 13-2, an orthogonal modulator 14-3 corresponding to an uplink component carrier center frequency f_Tx3, a baseband modulation section 15-3, an orthogonal modulator 14-4 corresponding to an uplink component carrier center frequency f_Tx4, and a baseband modulation section 15-4. Further, as common sections, there are provided a mapping section 7, the transmission/reception band setting section 8, the transmission signal processing control section 9, a random access generation section 11, and an uplink control message generation section 17.

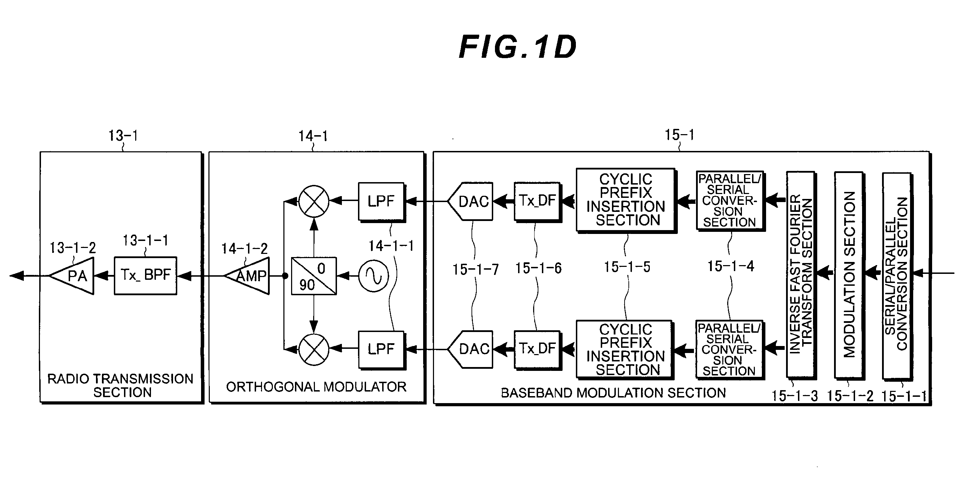

With a direct conversion system taken as an example, FIG. 1D shows the detailed configurations of a radio transmission section, an orthogonal modulator, and a baseband modulation section. FIG. 1A shows a case where these sections are present in respective plural numbers, and all of these have the similar configurations. Incidentally, other transmission systems, such as a super-heterodyne system, may be applied. Taking transmission of one uplink component carrier signal into account, the transmission section includes a radio transmission section, an orthogonal modulator, and a baseband modulation section. Transmission data (user uplink traffic data, control data, reference signal. etc.) is input to the mapping section 7. Predetermined uplink radio frame data is generated; input to the respective baseband modulation sections 15-1 to 15-4; subjected to serial/parallel data conversion by the serial/parallel conversion section 15-1-1; subjected to phase modulation, such as BPSK, QPSK, etc. through symbol coordinate transform by the modulation section 15-1-1; and transformed into OFDM signals by an inverse fast Fourier transform section 15-1-3.

OFDM signals in the I/Q phase are converted by respective parallel/serial conversion sections 15-1-4; input to respective cyclic prefix insertion sections 15-1-5; added with a cyclic prefix; and input to a transmission band limiting digital filters Tx_DF 15-1-6 (for example, an uplink component carrier signal band). The OFDM signals, which are digital signals, are converted by a DAC (Digital to Analog Converter) section 15-1-7 into analog signals, and subjected to orthogonal modulation by the orthogonal modulator 14-1 having LPF 14-1-1, AMP 14-1-2, and the like.

In the radio transmission section 13-1, an uplink component carrier signal with a center frequency of f_Tx1 is generated, and the uplink component carrier signal is transmitted from a transmitting shared antenna to the base station apparatus via an RF (radio frequency) transmission band filter Tx_BPF 13-1-1 (for example, a filter having a 60 MHz pass band with a center of 2.4 GHz transmitting band), a PA 13-1-2 (power amplifier), and the antenna sharing unit DUP 1. This example of configuration generates the uplink component carrier of an OFDM signal, however, a configuration of SC-FDMA (single carrier frequency-division multiple access) may also generate the uplink component carrier of an SC-FDMA signal.

The transmission section includes the uplink control message generation section 17, the random access generation section 11, the transmission signal processing control section 9, the mapping section 7, the transmission/reception band setting section 8, the baseband modulation sections 15-1 to 15-4, the orthogonal modulators 14-1 to 14-4, and the radio transmission sections 13-1, 13-2. FIG 1A shows an example where the number of transmitting antennas is equal to the number of frequency bands of the uplink component carriers shown in FIG. 1B and the number of radio transmission sections is equal to the number of the center frequencies of the uplink component carriers. However, the configuration of a mobile station apparatus may be such that a part or all of the transmitting antenna or the radio transmission section are made common due to wider-band and higher-performance of the radio device, and further may be such that the number of transmitting antennas and the number of radio transmission sections are larger than the number of uplink component carriers.

Herein, for generalization, one uplink component carrier transmission branch is defined for each uplink component carrier corresponding to carrier aggregation. For example, the transmission branch f_Tx1, which is the transmission branch for the uplink component carrier f_Tx1, includes the transmitting antenna 1-1, the transmission/reception antenna sharing unit DUP 2-1, the radio transmission section 13-1, the orthogonal modulator 14-1, and the baseband modulation section 15-1. ON-OFF control of a transmission branch means that it controls whether or not to transmit a corresponding uplink component carrier, and turns-on or turns-off a part or all of the functions of the devices of the transmission branch, depending on the hardware configuration and the device configuration. For example, in the case of FIG. 1A, turning-off the reception branch f_Tx1 means that it stops a part or all of the functions of the orthogonal modulator 14-1 and the baseband modulation section 15-1 to reduce the power consumption.

Turning-off the transmission branches f_Tx3 and f_Tx4 means that it stops a part or all of the functions of the orthogonal modulators 14-3 and 14-4, the baseband modulation sections 15-3 and 15-4, and the radio transmission section 13-2 to reduce the power consumption.

To the uplink control message generation section 17, input is information necessary for generation of uplink control messages (layer 3 message) to be notified to the base station apparatus at an appropriate timing, according to an instruction by an upper layer. The uplink control message generation section 17 generates respective control messages, according to the information having been input, performs channel mapping by the mapping section 7, and outputs the control messages to the respective baseband modulation sections 15-1 to 15-4. Uplink user traffic data, uplink control data, etc. included in transmission data are subjected to channel mapping by the mapping section 7, and input to the baseband modulation sections 15-1 to 15-4.

Further, random access information is input to the random access generation section 11, and random access data is generated. The random access information includes preamble information, transmission resource information, and the like. Uplink scheduling information is input to the transmission signal processing control section 9. The uplink scheduling information includes modulation information (for example, BPSK, QPSK, etc.), resource block allocation information, transmission timings, multiplexing methods, and the like related to respective physical channels. The transmission signal processing control section 9 sets the uplink scheduling information to the baseband modulation sections 15-1 to 15-4 and the mapping section 7, and the baseband modulation sections 15-1 to 15-4 perform OFDM signal modulation of respective data having been input.

Respective component carriers generated by the baseband modulation sections 15-1 to 15-4 are input to the orthogonal modulators 14-1 to 14-4, and uplink component carriers are transmitted via the radio transmission sections 13-1 to 13-2. For the respective transmission branches, the transmission/reception band setting section 8 sets frequency bands (for example, the 2.4 GHz band) to be transmitted, uplink component carrier center frequencies (for example, f_Tx1 and f_Tx2), and uplink component carrier bandwidths (for example, 20 MHz).

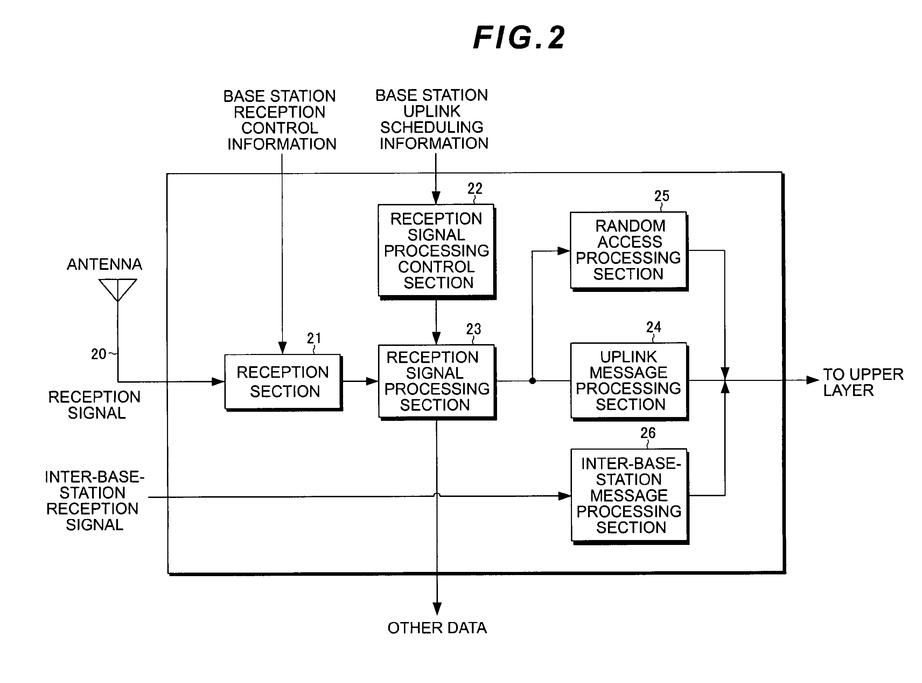

FIG. 2 is a block diagram showing an example of a configuration of a reception device of a base station apparatus in the first embodiment of the present invention. The present reception device includes an antenna 20, a reception section 21, a reception signal processing control section 22, a reception signal processing section 23, an uplink message processing section 24, a random access processing section 25, and an inter-base-station message processing section 26. Reception signals (transmission signals from mobile station apparatuses) are received via the antenna 20 by the reception section 21. Further, inter-base-station reception signals (transmission signals from base station apparatuses) are transmitted from neighboring base station apparatuses periodically or at events, and input to the inter-base-station message processing section 26.

The reception section 21 receives a reception signal, based on base station receiving control information. The base station receiving control information includes receiving timings, multiplexing methods, resource allocation information, and the like related to respective channels of respective mobile station apparatuses. The reception section 21 outputs a signal, which has been received according to the base station receiving control information, to the reception signal processing section 23. Basic station unlink scheduling information is input to the reception signal processing control section 22, The basic station uplink scheduling information includes demodulation information of the reception signal and the like, The reception signal processing control section 22 sets the uplink scheduling information to the reception signal processing section 23.

The reception signal processing section 23 divides input signals for respective mobile station apparatuses, and further appropriately demodulates for respective channels. When an input signal is an uplink message from a mobile station apparatus, the input signal is output to the uplink message processing section 24. When an input signal is a random access signal obtained from a random access channel, the input signal is output to the random access processing section 25. Signals other than these signals processed by the reception signal processing section 23, such as user traffic data, uplink control data and other control messages, are input as other information to individual processing blocks, which is not related to the present embodiment, and accordingly description thereof will be omitted.

The uplink message processing section 24 obtains control parameters included in respective uplink messages and outputs the control parameters to the upper layer. The inter-base-station message processing section 26 obtains base station control parameters included in respective inter-base-station messages, and outputs the base station control parameters to the upper layer. The random access processing section 25 determines, from a received random access signal, a preamble sequence that a mobile station apparatus has transmitted, and outputs information (preamble receiving quality, a preamble number, etc.), which is obtained from the preamble sequence, to the upper layer. Particularly, if the preamble sequence is a dedicated preamble sequence, the random access processing section 25 determines the preamble sequence to be random access in a handover procedure by the mobile station apparatus, and outputs the determination result to the upper layer.

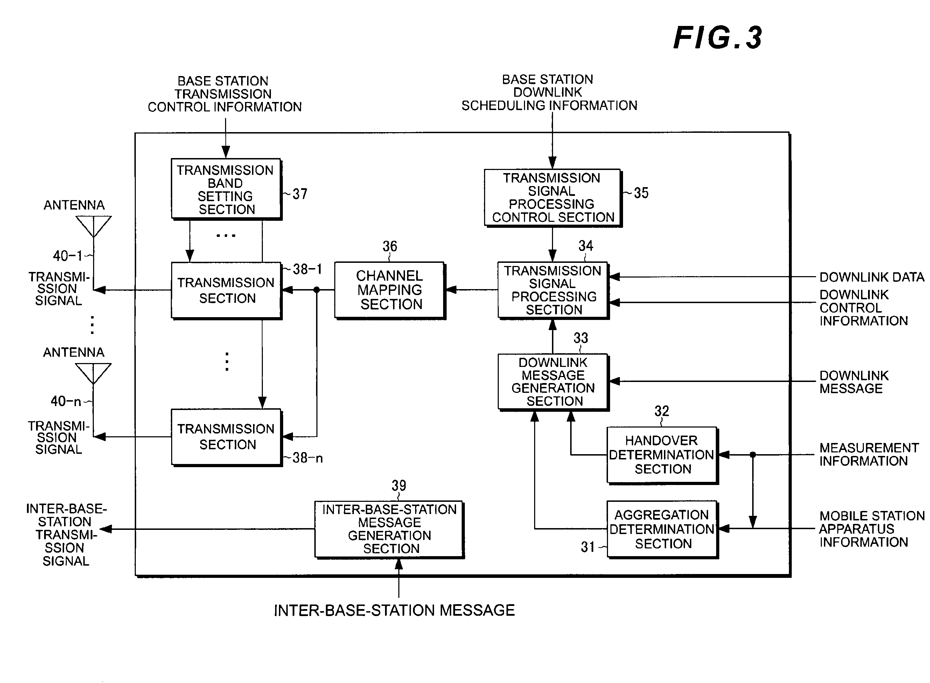

FIG. 3 is a block diagram showing an example of a transmission device of the base station apparatus in the first embodiment of the present invention. The present transmission device includes an aggregation determination section 31, a handover determination section 32, a downlink message generation section 33, a transmission signal processing section 34, a transmission signal processing control section 35, a channel mapping section 36, a transmission band setting section 37, transmission sections 38-1 to 38-n, an inter-base-station message generation section 39, and antennas 40-1 to 40-n. FIG. 3 shows an example where the numbers of transmission sections and transmission signal processing sections are equal to the number of antennas (n), however, in order to decrease the number of transmission sections (transmitters), a part or all of them may be made common, or transmission sections (transmitters) in a number greater than the number of antennas may be provided.

Measurement information is input from the upper layer to the handover determination section 32. Measurement information is information on a measurement result related to a cell in communication and neighboring cells reported from a mobile station apparatus. The handover determination section 32, when having determined that handover is necessary based on the measurement information, instructs the downlink message generation section 33 to generate a downlink message for instruction of handover. Mobile station apparatus information and the measurement information are input to the aggregation determination section 31, which instructs the downlink message generation section 33 to generate a downlink message for carrier aggregation when carrier aggregation is necessary. Mobile station information includes the capacity of a mobile station apparatus, the downlink buffer amount of a mobile station apparatus in communication, and the like.

Information necessary for generation of a downlink message (layer 3 message) to be notified to the mobile station apparatus at an appropriate timing, according to an instruction by the upper layer is input to the downlink message generation section 33. The downlink message generation section 33 generates respective control messages, corresponding to the information having been input. A downlink message, downlink data, and downlink control information are input to the transmission signal processing section 34. Base station downlink scheduling information is input to the transmission signal processing control section 35. The base station downlink scheduling information includes modulation information for a transmission signal and the like. The transmission signal processing control section 35 sets the base station downlink scheduling information to the transmission signal processing section 34, which performs modulation of respective data having been input.

Data after modulation that is output from the transmission signal processing section 34, according to scheduling, is subjected to physical channel mapping by the channel mapping section 36. The transmission band setting section 37 sets frequency bands to be transmitted to the respective transmission sections 38-1 to 38-n. Physical channels that are output from the channel mapping section 36 are output via the antennas 40-1 to 40-n, according to the frequency bands having been set to the transmission sections 38-1 to 38-n. Transmission control information includes information, such as transmission timings, multiplexing methods, resource allocation information, which are related to the respective physical channels.

On the other hand, an inter-base-station message is input to the inter-base-station message generation section 39, and output as an inter-base-station transmission signal, using a line such as a dedicated line. Incidentally, in FIGS. 2 and 3, components of other base stations are not related to the present embodiment, and accordingly, description will be omitted.

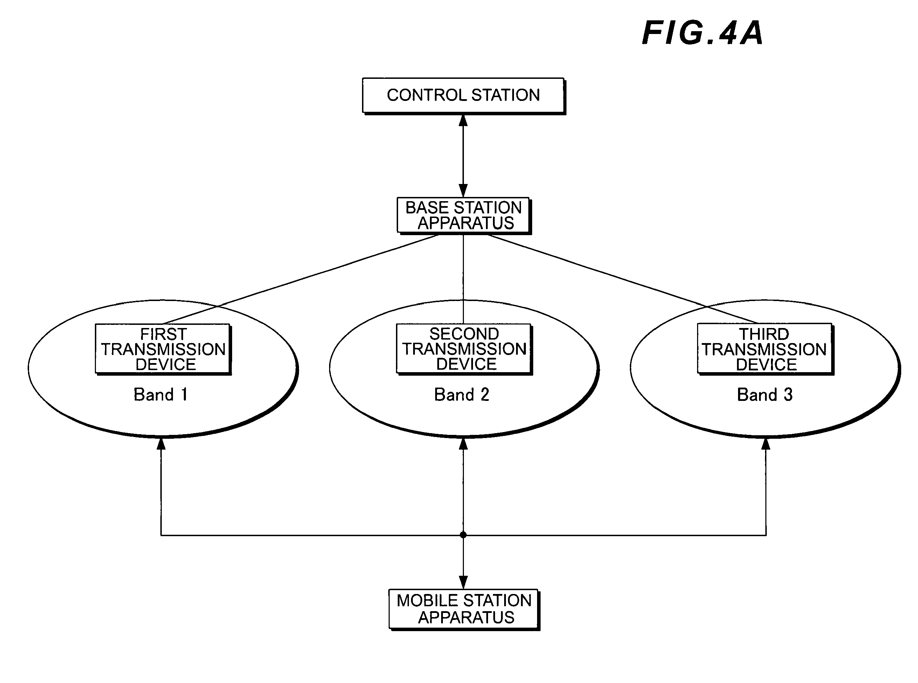

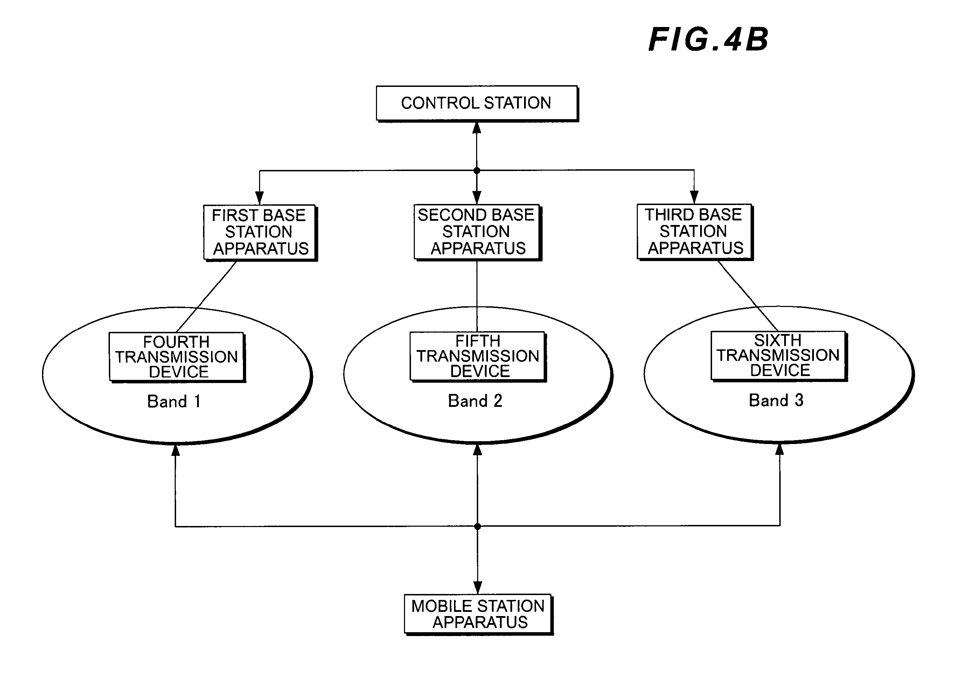

FIGS. 4A and 4B are diagrams showing an example of network configuration in the present embodiment. When a mobile station apparatus can simultaneously communicate in a plurality of frequency bands (Band 1 to Band 3) by carrier aggregation, a case can be assumed, in terms of network configuration, that a predetermined base station apparatus includes transmission devices (reception devices) for every plural frequency bands (Band 1 to Band 3). Further, other than this case, a case that base station apparatuses are provided for every frequency bands (Band 1 to Band 3). There is no problem with either case in carrying out the present embodiment. Of course, the mobile station apparatus can simultaneously receive both Band 1 in FIG. 4A and Band 2 in FIG. 4B by carrier aggregation. Further, a base station apparatus can be managed by an upper control station as shown, or carrier aggregation may be realized by performing collaborative control between base station apparatuses. When performing collaborative control between base station apparatuses, it is also possible to adopt a configuration that does not require a control station.

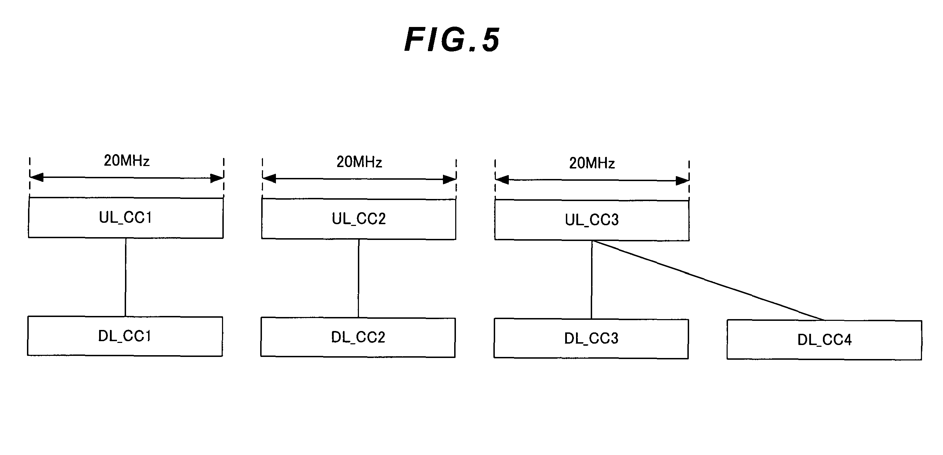

FIG. 5 is a diagram showing an example of correspondence relationship between downlink carrier components and uplink carrier components to be configured when a mobile station apparatus performs carrier aggregation. Each of the carrier components includes 20 MHz. In this arrangement, a downlink carrier component DL_CC1 corresponds to an uplink carrier component UL_CC1. That is, the feedback of ACK/NACK and reception quality of data received by DL_CC1 is transmitted, using the resource of UL_CC1. Further, it is also possible that a plurality of downlink carrier components correspond to an uplink carrier component. In the example shown in FIG. 5, the resource of UL_CC3 is used to transmit the feedback of ACK/NACK and the reception quality of both data received by DL CC3 and DL_CC4. The mobile station apparatus recognizes each carrier component as a cell without particularly taking into account a base station apparatus which transmits a downlink carrier component or receives an uplink carrier component. From broadcast information of a selected cell, the mobile station apparatus obtains information such as the frequency band and the bandwidth of a corresponding uplink carrier component.

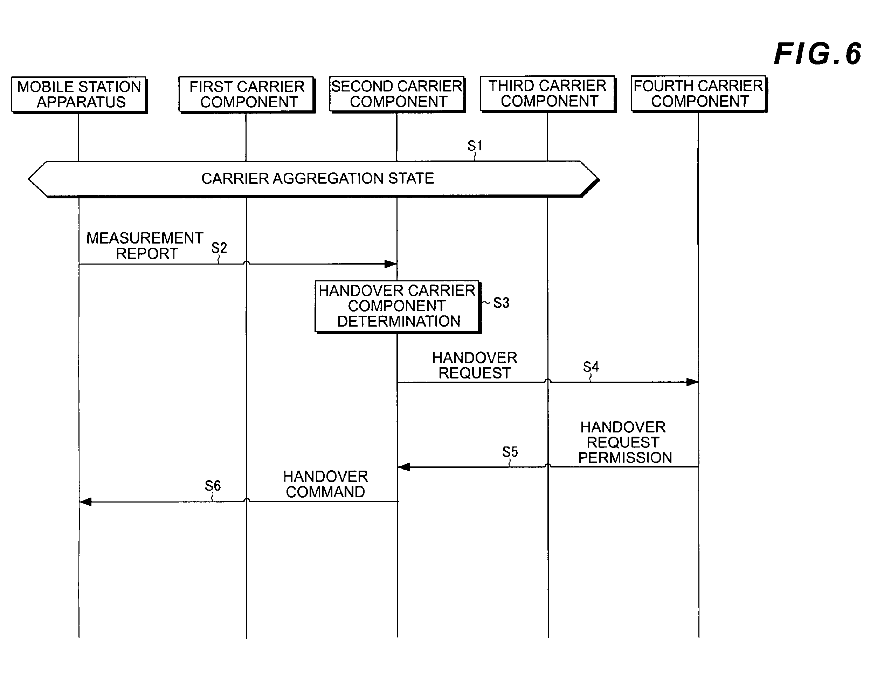

FIG. 6 is a sequence chart in the present embodiment, showing a procedure in which a base station apparatus determines the necessity of handover by a mobile station apparatus in carrier aggregation and notifies a handover command. FIG. 6 shows a procedure of determining the necessity of handover in a state (carrier aggregation state) that a mobile station apparatus and the first to fourth carrier components are present and the mobile station apparatus is receiving the first to third carrier components. That is, the first to the third carrier components, which are handover sources (each called a source cell or a source carrier component), are using frequency bands which are different from each other, while the fourth carrier component, which is a handover destination (called a target cell or a target carrier component) may use the same frequency band as that of one of the first to the third carrier components or may use a different frequency band. However, carrier components in the same frequency band must not be simultaneously received.

Incidentally, the first to the fourth carrier components may be implemented by transmitters (receivers) of different base station apparatuses, and may be implemented by different transmitters (receivers) a part or all of which are provided in a same base station apparatus. It is assumed that a mobile station apparatus in the present example has a capacity that enables carrier aggregation of at least two frequency bands. Actually, resource allocation by a downlink shared control channel is necessary prior to transmission/reception of respective control messages, but the resource allocation is omitted in the drawings and description.

First, in a carrier aggregation state (step S1), the mobile station apparatus receives respective downlink reference signals in respective carrier components, and measures the downlink reception qualities. Then, when a handover condition notified from a base station apparatus in advance is satisfied at least in one carrier component, the mobile station apparatus performs a measurement report (step S2). Handover conditions herein include, for example, the followings. (1) The downlink reception quality is below a predetermined threshold. (2) The downlink reception quality of a carrier component (target cell) that is not in carrier aggregation is above the predetermined threshold. (3) The downlink reception quality of a carrier component (target cell) that is not in carrier aggregation is above the downlink reception quality of a carrier component (source cell) in carrier aggregation.

Herein, in order to distinguish handover for switching a carrier component in carrier aggregation from normal handover, it is also possible to allocate carrier component IDs (CCID), which are frequency band identifiers, to respective cells from the base station apparatus. For example, when a same CCID is allocated to the first carrier component and the second carrier component, it means that the first carrier component and the second carrier component can be subjected to carrier aggregation. On the other hand, when CCIDs are different, it means that the carrier aggregation cannot be performed with the first carrier component, or with the second carrier component.

In such a manner, by using CCIDs, a mobile station apparatus can distinguish measurement reports on carrier aggregation from other reports. Further, a base station apparatus can set handover conditions (measurement event occurrence conditions) which are applicable only to carrier aggregation. CCIDs are preferably notified by broadcast information, but may be dedicatedly notified to the mobile station apparatus. Further, cell IDs may be applied as CCIDs. In case of using cell IDs, the mobile station apparatus determines that cells having the same cell ID in different frequency bands to be carrier components that allow carrier aggregation. Incidentally, as downlink reception quality, used is a reception measurement value of a downlink reference signal represented by EUTRA Carrier RSSI (received signal strength indicator), RSRP (reference signal received power), RSRQ (reference signal received quality), CQI (channel quality indicator), pass loss, or the like.

A measurement report message at least includes a satisfied handover condition and information (a cell ID, a frequency band, a CCID, etc.) that identifies a satisfied carrier component (target cell). An uplink carrier component for transmission of a measurement report message is preferably transmitted by the carrier component for which the handover condition included in the measurement report is satisfied, but also cab be transmitted by a carrier component to which the closest transmittable resource is assigned.

The example in FIG. 6 represents a case that a measurement report message is transmitted to the second carrier component. Herein, the base station apparatus with the second carrier component performs handover carrier component determination (step S3). The base station apparatus determines from the reported downlink reception quality whether the mobile station apparatus needs handover, and determines a carrier component (target cell) suitable as a handover destination, from the downlink communication quality notified by the measurement report message. If it is determined that handover is necessary, the base station apparatus transmits a handover request message to a base station apparatus that is corresponding to the carrier component (target cell) selected as the handover destination (step S4). It is also possible that the handover destination and the handover source are the same base station apparatus. In FIG. 6, the second carrier component is removed from an object of carrier aggregation, and the fourth carrier component is newly allocated.

The base station apparatus having received the handover request message exchanges information related to the mobile station apparatus and transfers the traffic data in transmission/reception. When the above-described procedure is completed and handover becomes possible, the base station apparatus with the carrier component of the handover destination transmits a handover request permission message to the base station apparatus with the carrier component having transmitted the handover request message (step S5). Then, a handover command message is transmitted from the base station apparatus with the carrier component having received the handover request message to the mobile station apparatus (step S6).

Herein, the handover command message is transmitted from the carrier component (source cell) of the handover source. The mobile station apparatus becomes able to determine that the carrier component (source cell), from which the handover command message has been received, is the handover source. Thus, the base station apparatus does not need to have the handover command message include control information for designation as to which carrier component in the current carrier aggregation is the handover object, and thereby reduction in the information amount and simplification of handover control can be attained. Incidentally, it is also possible to have the handover request message and the handover request permission message exchanged via a control station. In this case, not the base station apparatus but the control station is provided with the function to determine a handover carrier component.

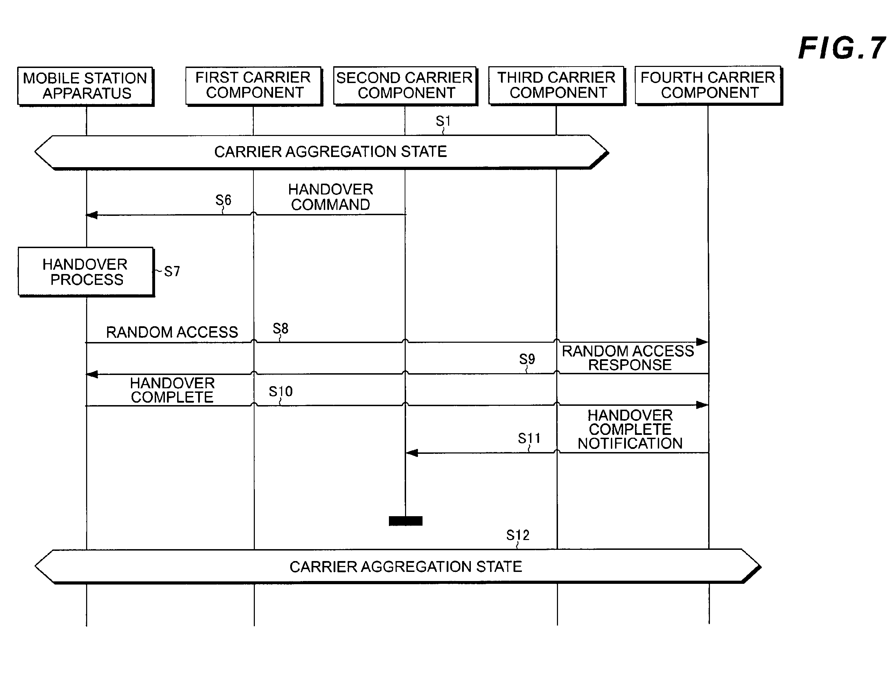

FIG. 7 is a sequence chart, in the present embodiment, showing a procedure of execution of handover up to completion of the handover by the mobile station apparatus that has received the handover command message. FIG. 7 continues from FIG. 6. FIG. 7 shows the procedure by the mobile station apparatus, which is in the state (carrier aggregation state: step S1) of receiving the first to the third carrier components, to remove the second carrier component from an object of carrier aggregation, according to the handover command message (step S6), and newly receive the fourth carrier component. Description of the mobile station apparatus and carrier components in the figure is the same as that for FIG. 6, and accordingly omitted.

The mobile station apparatus having received the handover command message (step S6) starts a handover process (step S7). In the handover process, the mobile station apparatus obtains information (carrier component information) on carrier components to be an object of handover. Carrier component information includes at least frequency band information and a cell ID. The mobile station apparatus stops the reception branch that is receiving transmission signals from the base station apparatus with the carrier component (source cell) of the handover source; operates a reception branch that corresponds to the base station apparatus with the carrier component (target cell) having been newly instructed; starts receiving transmission signals from the base station apparatus with the carrier component (target cell) having been newly instructed; and tries radio synchronization. The reception branch that receives transmission signals from the target cell does not need to be the reception branch having been receiving signals from the source cell. If downlink carrier components and uplink carrier components are corresponding to each other in a one-to-one manner, the mobile station apparatus also stops the transmission branch that transmits transmission signals to the base station apparatus with the carrier component (source cell) of the handover source.

The mobile station apparatus having completed the radio synchronization subsequently operates the transmission branch that corresponds to the base station apparatus with the newly instructed carrier component (target cell), and transmits a random access channel to the base station apparatus that corresponds to the fourth carrier component (step S8). If a dedicated preamble sequence is specified by the handover command message, the preamble sequence is used. The base station apparatus, which corresponds to the fourth carrier component having detected the random access channel, transmits a random access response to the mobile station apparatus (step S9). The mobile station apparatus having received the random access response transmits a handover complete message to the base station apparatus that corresponds to the fourth carrier component (step S10). The base station apparatus with the fourth carrier component transmits a handover complete message to the base station apparatus with the carrier component of the handover destination to notify that the handover has been normally completed, and completes the procedure (step S11). It is also possible that the base station apparatus with the carrier component of the handover destination and the base station apparatus with the carrier component of the handover source are the same base station apparatus. Then, the first, third, and fourth carrier components form carrier aggregation state (step S12).

Incidentally, a mobile station apparatus ID necessary for receiving the random access response may be notified by the handover command message, and it is also possible to use, without a change, the mobile station apparatus ID (cell-radio network temporary identifier, also called C-RNTI) having been used before the handover. When the mobile station apparatus ID having been used before the handover is used, the same mobile station apparatus ID is used for all carrier components in carrier aggregation. When a mobile station apparatus ID has been notified by the handover command message, the notified mobile station apparatus ID is used for receiving the corresponding carrier component. When a mobile station apparatus ID has not been notified, the same mobile station apparatus ID is continuously used.

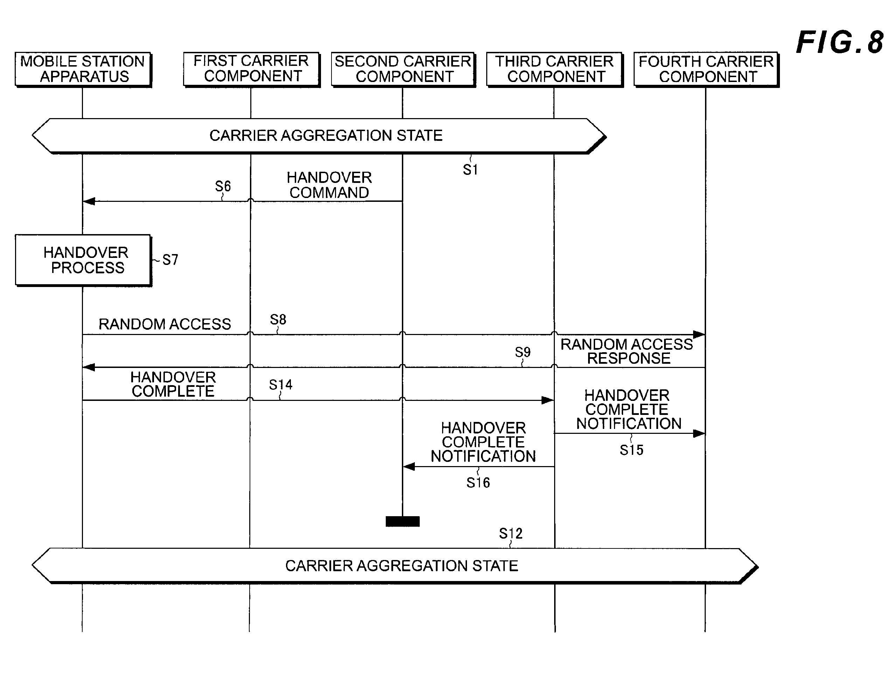

Incidentally, in FIG. 7, it is also possible to apply a sequence for transmitting the handover complete message to a base station apparatus other than the base station apparatus with the carrier component (target cell) that newly performs receiving of signals. An example of this case is shown in FIG. 8. Description of the mobile station apparatus and the carrier components in FIG. 8 is the same as that for FIG. 6, and accordingly omitted.

The mobile station apparatus having received the handover command message (step S6) starts the handover process (step S7). In the handover process, the mobile station apparatus obtains information (carrier component information) on the carrier component (source cell) to be switched. The carrier component information includes at least frequency band information and a cell ID. Herein, handover-complete-message transmission carrier component information for transmission of a handover complete message is separately included in the handover command message. The mobile station apparatus stops the reception branch that is receiving transmission signals from the base station apparatus with the carrier component (source cell) of the handover source, operates the reception branch that corresponds to the base station apparatus with the newly instructed carrier component (target cell), starts receiving of transmission signals from the base station apparatus with the newly instructed carrier component (target cell), and tries radio synchronization. The reception branch that receives transmission signals from the target cell does not need to be the branch having been receiving signals from the source cell. If downlink carrier components and uplink carrier components are corresponding to each other in a one-to-one manner, the mobile station apparatus also stops the transmission branch that transmits transmission signals to the base station apparatus with the carrier component (source cell) of the handover source.

The mobile station apparatus having completed the radio synchronization subsequently operates the transmission branch that corresponds to the base station apparatus with the newly instructed carrier component (target cell), and transmits a random access channel to the base station apparatus that corresponds to the fourth carrier component (step S8). If a dedicated preamble sequence is specified by the handover command message, the preamble sequence is used. The base station apparatus, which corresponds to the fourth carrier component having detected the random access channel, transmits a random access response to the mobile station apparatus (step S9). The mobile station apparatus having received the random access response transmits a handover complete message to the base station apparatus that is specified by the handover command message and corresponds to the handover-complete-message transmission carrier component information (step S14). FIG. 8 shows that the base station apparatus with the third carrier component has been specified.

The base station apparatus with the third carrier component notifies the fact that the handover has been normally completed to the base station apparatuses with the carrier components of the handover source and the handover destination by a handover complete notification message, and completes the procedure (step S15, step S16). Herein, in order to reduce the information amount of the handover command message, when no handover-complete-message transmission carrier component information is present, it is also possible to transmit a handover complete message by the carrier component of the handover destination. Otherwise, when no handover-complete-message transmission carrier component information is present, it is also possible to transmit a handover complete message by the carrier component having received the handover command message. Then, the mobile station apparatus, the first, third, and fourth carrier components form a carrier aggregation state (step S12).

Incidentally, the base station apparatus may transmit the carrier component information for transmitting the handover complete message, having the random access response include the information. The carrier component information included in the handover complete message or the random access response is selected by the base station apparatus, wherein the reported downlink reception quality, the load state of the base station apparatus, and presence/absence of resource allocation can be taken into account for the criteria of the selection. As it is possible to transmit the handover complete message with a carrier component determined by the base station to be the most suitable, the transmission success probability of the handover complete message is improved.

For the respective control messages in FIGS. 6 to 9, existing control messages may be reused for EUTRA. For example, a handover command message can be reused just by adding parameters necessary for an RRC connection reconfiguration message, and a handover complete message can be reused just by adding parameters necessary for an RRC connection reconfiguration complete message. Further, one carrier component can be replaced by handover at maximum. This is because, in order to replace a plurality of carrier components simultaneously, radio synchronization and a random access procedure are necessary for the respective carrier components, which make the process complicated.

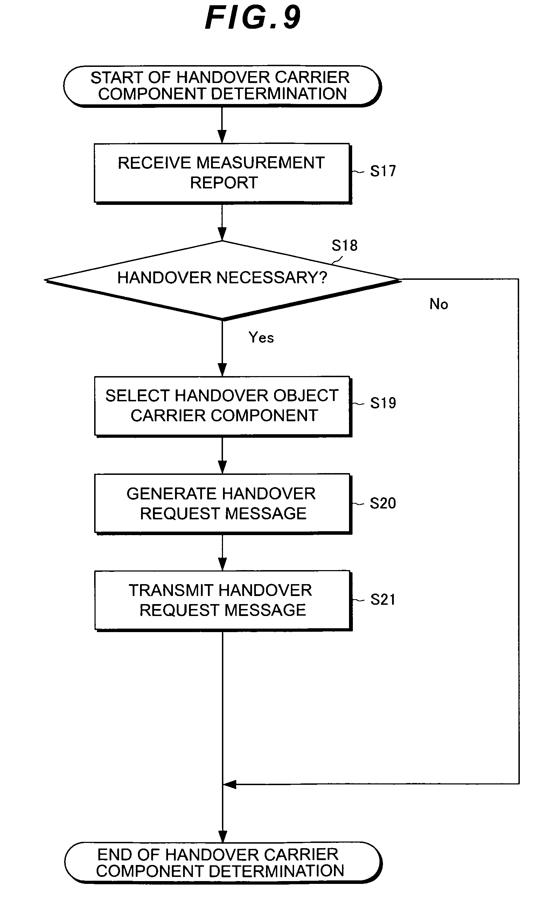

FIG. 9 is a flowchart showing an example of determination of a handover carrier component in FIG. 6. A procedure of this process is preferably performed by a base station apparatus, however, a control station may be provided with the same procedure of the process. First, in receiving a measurement report, a measurement report message including a measurement result that corresponds to at least one predetermined carrier component in a carrier aggregation state is received (step S17). A measurement result (the downlink reception quality, satisfied handover conditions, etc.) of each carrier component reported by the measurement report message is obtained, and based on the obtained measurement result, determination is made as to whether handover is necessary (step S18).

If it is determined that handover is unnecessary, or if handover is impossible, the process is terminated then. On the other hand, if handover is necessary, one carrier component (target cell) suitable for handover is selected in handover object carrier component selection (step S19). Then, a handover request message for notifying handover to the selected carrier component is generated (step S20), and the handover request message is transmitted (step S21).

The flowchart in FIG. 9 is an example of a processing procedure, for example, in a base station apparatus or a control station. A processing procedure other than this may be used as long as it is a method that determines the necessity of handover with a mobile station apparatus, based on measurement results of carrier components by which the mobile station apparatus in a carrier aggregation state is receiving signals, and selects a carrier component for switching by handover.

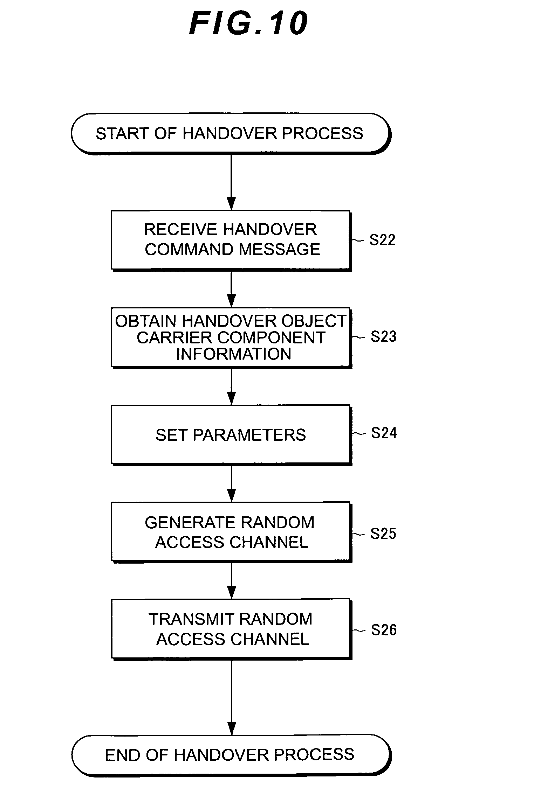

FIG. 10 is a flowchart showing an example of a procedure of a handover process of the mobile station apparatus in FIGS. 7 to 9. The mobile station apparatus receives a handover command message transmitted from a base station apparatus in receiving a handover command message (step S22). Then, in obtaining handover object carrier component information, the mobile station apparatus confirms the content of control of the handover (step S23). Specifically, the mobile station apparatus recognizes one carrier component, which is the handover source (source cell) and currently in carrier aggregation, and the carrier component (target cell) of the handover destination. As described above, information on the source cell is not notified, and the mobile station apparatus determines that the carrier component having received the handover command message is the source cell.

Then, in setting parameters, the mobile station apparatus performs switching from the source cell to the target cell (step S24). Specifically, in order to receive a downlink transmission signal from the base station apparatus that corresponds to the carrier component of the handover destination, the mobile station apparatus sets, to the reception device of the mobile station apparatus, a reception frequency band and bandwidth, and other parameters necessary for receiving signals via a physical channel, and tries establishment of synchronization. If synchronization has been successfully established, the mobile station apparatus generates a random access channel (step S25). If a dedicated preamble sequence has been specified, the mobile station apparatus generates a random access channel, based on the preamble sequence. If a dedicated preamble sequence is not specified, the mobile station apparatus generates a random access channel, based on a preamble sequence that is selected at random. Then, the mobile station apparatus transmits the generated random access channel to the base station apparatus of the carrier component as the handover destination (step S26).

The flowchart in FIG. 10 is an example of a processing procedure on the mobile station apparatus. However, a processing procedure other than this may be used as long as it is a method in which the mobile station apparatus recognizes the carrier component of the handover source and the carrier component of the handover destination from a received handover command message and executes handover.

In the present embodiment, the mobile station apparatus performs, in a carrier aggregation state, measurement reporting on handover, distinguishing carrier components (cells) of the same carrier component ID from carrier components (cells) of different carrier component IDs. Further, according to the command of the base station apparatus, the mobile station apparatus starts a handover procedure to the carrier component (cell) of the same carrier component ID, and switches the carrier component (cell). The base station apparatus notifies the mobile station apparatus of the carrier component (cell) to be subjected to handover, based on the measurement report by the mobile station apparatus.

In the present embodiment, the mobile station apparatus can perform control, distinguishing measurement reports on carrier aggregation from other measurement reports, and it is thereby unnecessary to transmit unnecessary measurement results to the base station apparatus. Thus, it is possible to effectively use an uplink transmission resource. Further, even if the mobile station apparatus is receiving a plurality of frequency bands in a carrier aggregation state, as it is unnecessary to have a handover command message include information on the carrier component which stops reception after handover, the base station apparatus can reduce the information amount of signaling. Further, by specifying, from the base station apparatus, a carrier component for transmitting a handover complete message, it is possible to improve the probability of transmission success of the handover complete message and the probability of handover success.

### Second Embodiment

A second embodiment according to the present invention will be described below. In the first embodiment, a handover command message is transmitted from the carrier component (cell) of a handover source. However, the fact that a handover is instructed means that the carrier component (cell) has a comparatively bad reception quality, and the probability of reception failure of a handover command message is also high. In this situation, in the present embodiment, a method of improving the probability of reception success of a handover command message and the probability of handover success by transmitting the handover command message with another carrier component in carrier aggregation will be described. A reception device and a transmission device of a mobile station apparatus and a reception device and a transmission of a base station apparatus in the present embodiment can be the same as those in the first embodiment. A network configuration in the present embodiment can be the same as that in FIG. 5.

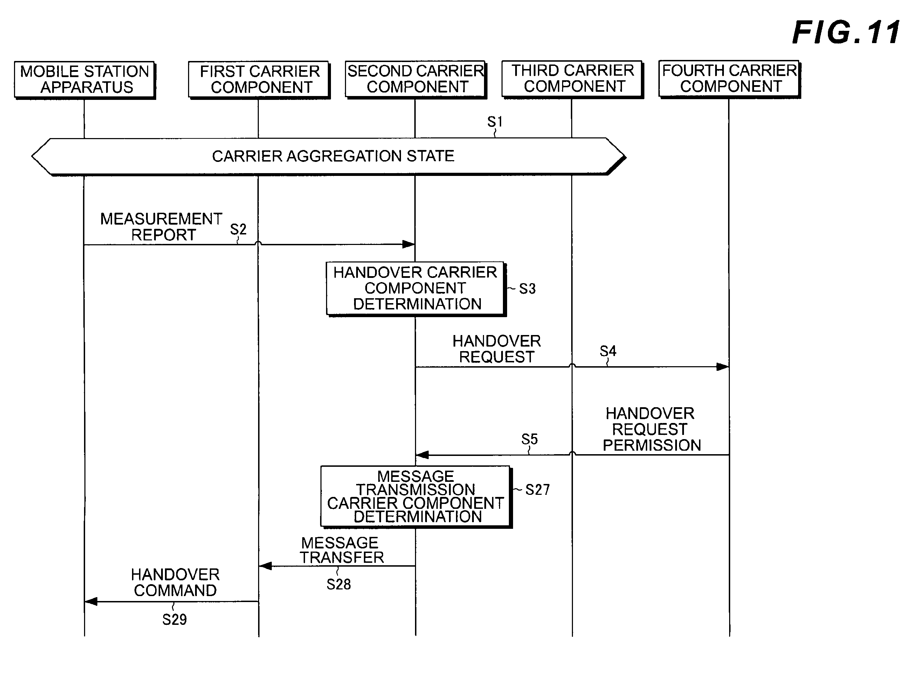

FIG. 11 is a sequence chart showing a procedure, by a base station apparatus, of determining the necessity of handover for a mobile station apparatus in carrier aggregation up to notifying a handover command. The procedure up to the moment when the base station apparatus of the second carrier component (source cell) having received a measurement report message receives a handover request permission message is the same as in FIG. 6, and description will be accordingly omitted. That is, the measurement report message includes at least a satisfied handover condition and information (a cell ID and a frequency band, or CCID, etc.) that identifies the carrier component (target cell) satisfying the condition.

A difference from FIG. 6 is that the base station apparatus with the carrier component having received a handover request permission message performs determination of carrier component for message transmission (step S27), selects a carrier component (cell) that is the most suitable for transmission of a handover command message to the mobile station apparatus, and transfers the handover command message to the base station apparatus with the selected carrier component (step S28). Herein, of course, the carrier component of the handover source is not selected. Further, if the carrier component having received the handover request permission message is the most suitable, the message is not transferred. The base station apparatus with a carrier component to which the handover command message has been transferred transmits the handover command message to the mobile station apparatus (step S29). FIG. 11 shows an example where the first carrier component is determined to be the most suitable as a carrier component (cell) for transmission of the handover command message, and the handover command message is transferred from the second carrier component.

The base station apparatus has the handover command message including source cell identification information for specifying as to which carrier component currently in carrier aggregation is the handover object. The source cell identification information includes, for example, a cell ID, a frequency band, or CCID, etc. Incidentally, in FIG. 11, it is also possible to exchange a handover request message and a handover request permission message via a control station. In this case, not the base station apparatus but the control station is provided with the function to determine a carrier component for message transmission. Likewise, it is also possible that the control station is provided with a function to decide a carrier component for message transmission, and in this case, the control station decides a carrier component for transmission of a handover command message, and a handover request permission message is transmitted to a base station apparatus that the control section has decided (not shown).

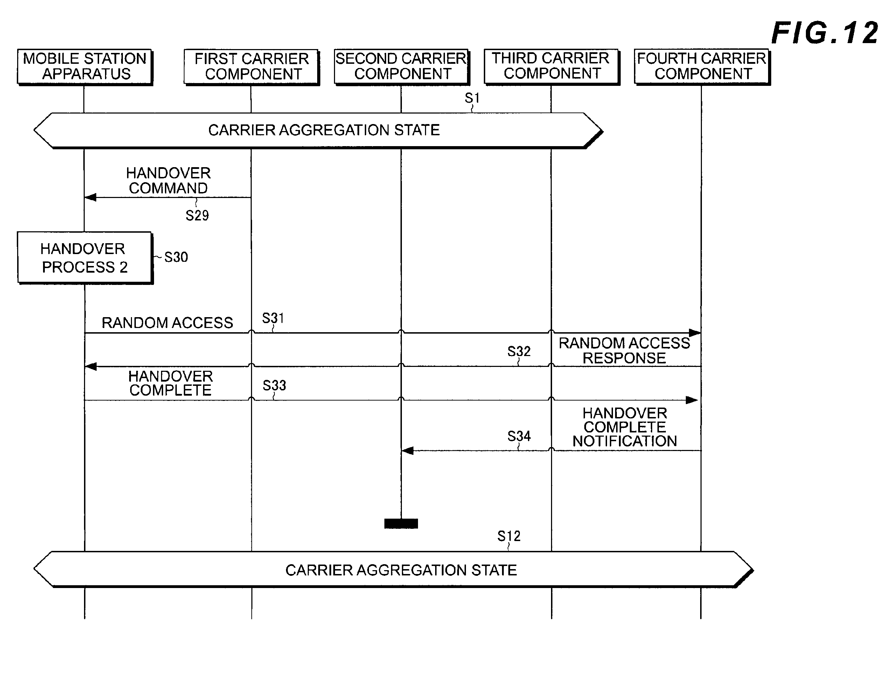

FIG. 12 is a sequence chart in the present embodiment showing the procedure of executing a handover up to completing the handover by a mobile station apparatus in carrier aggregation having received a handover command message. FIG. 12 continues from FIG. 11, and is the same as FIG. 7 except that a handover command message is possibly transmitted from a base station apparatus other than the base station apparatus with the carrier component (source cell) of the handover source. Description of the mobile station apparatus and carrier components in the figure is the same as that for FIG. 6, and accordingly omitted.

A mobile station apparatus having received a handover command message (step S29) starts handover process 2 (step S30). In the handover process 2, the mobile station apparatus obtains information (carrier component information) on a carrier component to be an object of handover and source cell identification information. The carrier component information includes at least frequency band information and a cell ID. The mobile station apparatus stops a reception branch that is receiving transmission signals from a base station apparatus with the carrier component (source cell) of the handover source; operates a reception branch that corresponds to a base station apparatus with a newly instructed carrier component (target cell); starts receiving transmission signals from the base station apparatus with the newly instructed carrier component (target cell); and tries radio synchronization. The reception branch that receives transmission signals from the target cell does not need to be the reception branch having been receiving signals from the source cell. If downlink carrier components and uplink carrier components are corresponding to each other in a one-to-one manner, the mobile station apparatus also stops the transmission branch that transmits transmission signals to the base station apparatus with the carrier component (source cell) of the handover source.

The mobile station apparatus having completed radio synchronization subsequently operates a transmission branch that corresponds to the base station apparatus with the newly instructed carrier component (target cell), and transmits a random access channel to a base station apparatus that corresponds to the fourth carrier component (step S31). If a dedicated preamble sequence is specified by the handover command message, the preamble sequence is used. The base station apparatus, which corresponds to the fourth carrier component having detected the random access channel, transmits a random access response to the mobile station apparatus (step S32). The mobile station apparatus having received the random access response transmits a handover complete message to the base station apparatus that corresponds to the fourth carrier component (step S33). The base station apparatus with the fourth carrier component transmits a handover complete message to the base station apparatus with the carrier component of the handover destination to notify that the handover has been normally completed, and completes the procedure (step S34). It is also possible that the base station apparatus with the carrier component of the handover destination and the base station apparatus with the carrier component of the handover source are the same base station apparatus.

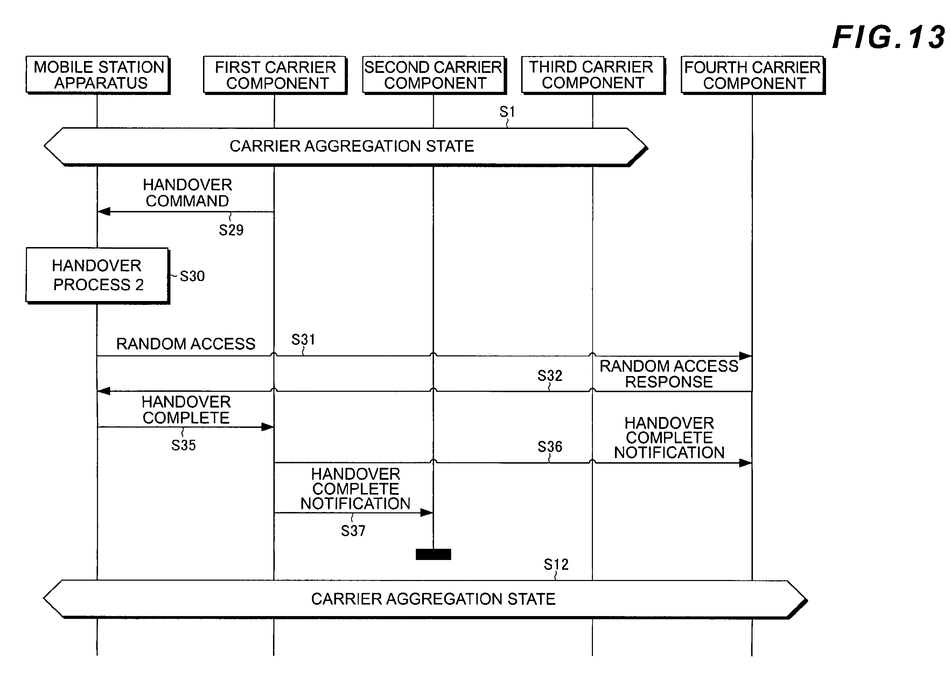

Incidentally, in FIG. 12, it is also possible to apply a sequence that transmits the handover complete message to a base station apparatus other than the base station apparatus with the carrier component (target cell) that newly performs receiving of signals. An example of this case is shown in FIG. 13. Description of the mobile station apparatus and the carrier components in the figure is the same as that for FIG. 11, and accordingly omitted. The mobile station apparatus having received the handover command message (step S29) starts the handover process 2 (step S30). In the handover process 2, the mobile station apparatus obtains information (carrier component information) on the carrier component (source cell) to be switched. The carrier component information includes at least frequency band information and a cell ID. Herein, handover-complete-message transmission carrier component information for transmission of a handover complete message is separately included in the handover command message.

The mobile station apparatus stops the reception branch that is receiving transmission signals of the base station apparatus with the carrier component (source cell) of the handover source; operates a reception branch that corresponds to the base station apparatus with the newly instructed carrier component (target cell); starts receiving of transmission signals from the base station apparatus with the newly instructed carrier component (target cell); and tries radio synchronization. The reception branch that receives transmission signals from the target cell does not need to be the reception branch having been receiving signals from the source cell. If downlink carrier components and uplink carrier components are corresponding to each other in a one-to-one manner, the mobile station apparatus also stops the transmission branch that transmits transmission signals to the base station apparatus with the carrier component (source cell) of the handover source.

The mobile station apparatus having completed the radio synchronization subsequently operates the transmission branch that corresponds to the base station apparatus with the newly instructed carrier component (target cell), and transmits a random access channel to the base station apparatus that corresponds to the fourth carrier component (step S31). If a dedicated preamble sequence is specified by the handover command message, the preamble sequence is used. The base station apparatus, which corresponds to the fourth carrier component having detected the random access channel, transmits a random access response to the mobile station apparatus (step S32). The mobile station apparatus having received the random access response transmits a handover complete message to a base station apparatus that corresponds to handover-complete-message transmission carrier component information specified by the handover command message (step S35). FIG. 13 shows that the base station apparatus with the first carrier component has been specified.

The base station apparatus with the first carrier component notifies the fact that the handover has been normally completed to the base station apparatuses with the carrier components of the handover source and the handover destination by a handover complete notification message, and completes the procedure (step S36, step S37). Herein, in order to reduce the information amount of the handover command message, when no handover-complete-message transmission carrier component information is present, it is also possible to transmit a handover complete message by the carrier component of the handover destination. Otherwise, when no handover-complete-message transmission carrier component information is present, it is also possible to transmit a handover complete message by the carrier component having received the handover command message.

Incidentally, the base station apparatus may transmit the carrier component information for transmitting the handover complete message, having the random access response include the information. The carrier component information included in the handover complete message or the random access response is selected by the base station apparatus, wherein the reported downlink reception quality, the load state of the base station apparatus, and presence/absence of resource allocation can be taken into account for the criteria of the selection. As it is possible to transmit the handover complete message with a carrier component determined by the base station to be the most suitable, the transmission success probability of the handover complete message is improved.

For the respective control messages in FIGS. 11 to 14, existing control messages may be reused for EUTRA. For example, a handover command message can be reused just by adding parameters necessary for an RRC connection reconfiguration message, and a handover complete message can be reused just by adding parameters necessary for an RRC connection reconfiguration complete message.

Further, one carrier component can be replaced by handover at maximum. This is because, in order to replace a plurality of carrier components simultaneously, radio synchronization and a random access procedure are necessary for the respective carrier components, which make the process complicated.

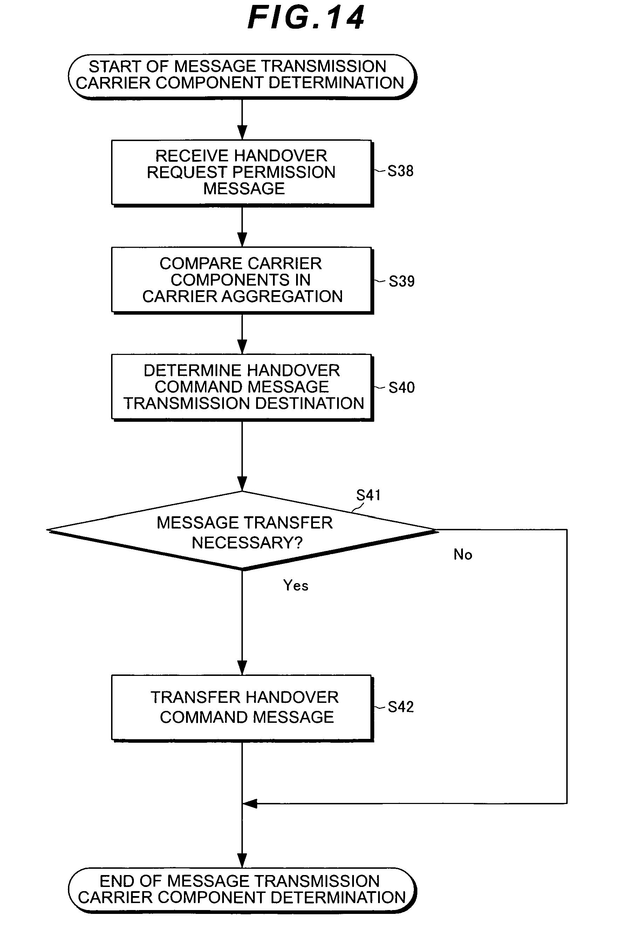

FIG. 14 is a flowchart showing an example of determination of a handover carrier component in FIG. 11. This processing procedure is preferably performed by a base station apparatus with the carrier component having received a handover request permission message, but a control station may be provided with the same processing procedure. First, in receiving a handover request permission message, the fact that preparation for handover is complete is notified from the base station apparatus with the carrier component of the handover destination (step S38). Then, the mobile station apparatus compares the respective carrier components in carrier aggregation (step S39), and selects one base station apparatus with a carrier component for transmission of the handover command message (step S40). The reported downlink reception quality, the load state of the base station apparatus, and presence/absence of resource allocation can be taken into account for the criteria of the selection.

Subsequently, the mobile station apparatus determines whether it is necessary to transfer the handover command message to the selected carrier component for message transmission (step S41). That is, if the carrier component that is executing the present processing procedure has been selected, it is unnecessary to transfer the handover command message, and the mobile station apparatus accordingly terminates the process. If it is necessary to transfer the handover command message, the mobile station apparatus transfers the handover command message, specifying the selected carrier component as the transfer target (step S42).

The flowchart in FIG. 14 is an example of a processing procedure in, for example, a base station apparatus or a control station. A processing procedure other than this may be used as long as it is a method for selecting a carrier component that is the most suitable for transmission of a handover command message, wherein the selection is made from carrier components by which the mobile station apparatus in a carrier aggregation state is receiving signals.

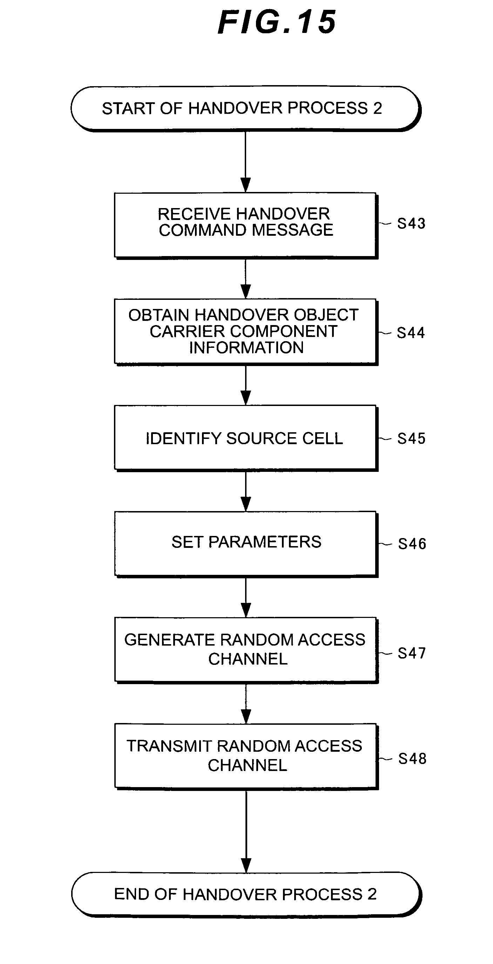

FIG. 15 is a flow chart showing an example of a handover processing procedure of the mobile station apparatus in FIGS. 12 to 14. In receiving a handover command message, the mobile station apparatus receives a handover command message transmitted from a base station apparatus (step S43). Then, in obtaining handover object carrier component information, the mobile station apparatus confirms the contents of control of handover (step S44). Specifically, the mobile station apparatus recognizes the carrier component (source cell) of a handover source and the carrier component (target cell) of a handover destination, which are currently in carrier aggregation. Then, in identifying the source cell, the mobile station apparatus recognizes the source cell from the source cell identification information having been notified by the handover command message (step S45).

Then, in setting parameters, the mobile station apparatus performs switching from the source cell to the target cell (step S46). Specifically, in order to receive downlink transmission signals from a base station apparatus that corresponds to the carrier component of the handover destination, the mobile station apparatus sets, to a reception device of the mobile station apparatus, parameters which are necessary for receiving signals via a physical channel, such as a reception frequency band and a bandwidth, and tries establishment of synchronization. When the mobile station apparatus has succeeded in establishing synchronization, the mobile station apparatus generates a random access channel (step S47). If a dedicated preamble sequence has been specified, the mobile station apparatus generates a random access channel, based on the dedicated preamble sequence. If a dedicated preamble sequence is not specified, the mobile station apparatus generates a random access channel, based on a preamble sequence selected at random. Then, the mobile station apparatus transmits the generated random access channel to the base station apparatus of the carrier component as the handover destination (step S48) .

The flowchart in FIG. 15 is an example of a processing procedure of the mobile station apparatus. A processing procedure other than this may be used as long as it is a method that recognizes the carrier component of the handover source and the carrier component of the handover destination from a received handover command message, and executes handover, based on specified parameters.

According to the present embodiment, a base station apparatus selects a base station apparatus with a carrier component that is the most suitable at the time of executing handover, as the base station apparatus with a carrier component for transmission of a handover command message. Further, a mobile station apparatus identifies the carrier component of a handover source, based on source cell identification information included in the handover command message.

According to the present embodiment, when a mobile station apparatus is receiving a plurality of frequency bands in carrier aggregation state, a base station apparatus can transmit a handover command message in the most suitable frequency band. Thus, it is possible to improve the probability of transmission success of a handover command message, and improve the probability of handover success.

### Third Embodiment

A third embodiment according to the present invention will be described below. In the first and second embodiments, it is necessary, prior to a handover complete message, to transmit a random access channel to the carrier component (target cell) of a handover destination, and establish uplink synchronization. However, if respective carrier components in carrier aggregation are controlled by a same base station apparatus, and the uplink reception timings of the respective carrier components are substantially the same, it is unnecessary to establish uplink synchronization at the time of handover for switching a carrier component of the same base station apparatus, and it is possible to omit a random access procedure.

In this situation, in the present embodiment, a method will be shown that can execute fast handover by omitting a random access procedure. A reception device and a transmission device of a mobile station apparatus and the reception device and a transmission device of a base station apparatus can be the same as those in the first embodiment. However, in the present embodiment, as shown in FIG. 4A, all of carrier components in carrier aggregation and the carrier component of a handover destination need to be controlled by the same base station apparatus.

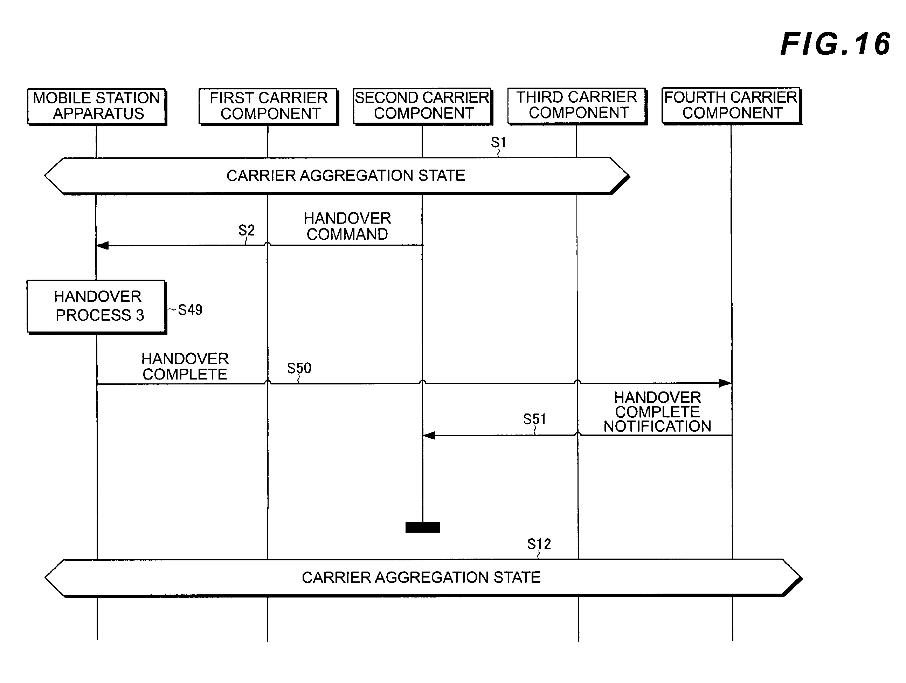

FIG. 16 is a sequence chart, in the present embodiment, showing a procedure by a mobile station apparatus that is in carrier aggregation and has received a handover command message, of executing handover up to completion of the handover. Description of the mobile station apparatus and carrier components in the figure is the same as that for FIGS. 6 and 7, and accordingly omitted.

The mobile station apparatus having received a handover command message (step S2) starts a handover process 3 (step S49). In the handover process 3, the mobile station apparatus obtains information (carrier component information) on a carrier component to be an object of handover and source cell identification information. The carrier component information includes at least frequency band information and a cell ID. The mobile station apparatus stops the reception branch that is receiving transmission signals from a base station apparatus with the carrier component (source cell) of the handover source; operates a reception branch that corresponds to the base station apparatus of a newly instructed carrier component (target cell); starts receiving of transmission signals from the base station apparatus with the newly instructed carrier component (target cell); and tries radio synchronization. The reception branch that receives transmission signals from the target cell does not need to be the reception branch having been receiving signals from the source cell. If downlink carrier components and uplink carrier component are corresponding to each other in a one-to-one manner, the mobile station apparatus also stops the transmission branch that transmits transmission signals to the base station apparatus with the carrier component (source cell) of the handover source.

The mobile station apparatus having completed the radio synchronization omits transmission of a random access channel; operates a transmission branch that corresponds to the base station apparatus with a newly instructed carrier component (target cell); and transmits a handover complete message to the base station apparatus that corresponds to the carrier component of the handover destination (step S50). Resource allocation information for transmission of the handover complete message is included in the handover command message or obtained by receiving a downlink shared control channel transmitted by the base station apparatus with the carrier component of the handover destination. The present example shows a case that the fourth carrier component is specified as the carrier component of the handover destination. The base station apparatus with the fourth carrier component notifies the fact that handover has been normally completed to the base station apparatus with the carrier component of the handover destination by a handover complete notification message, and completes the procedure (step S51). In the present embodiment, the carrier components of the handover destination and the handover source are inevitably of the same base station apparatus, and the handover complete notification message may be accordingly omitted.

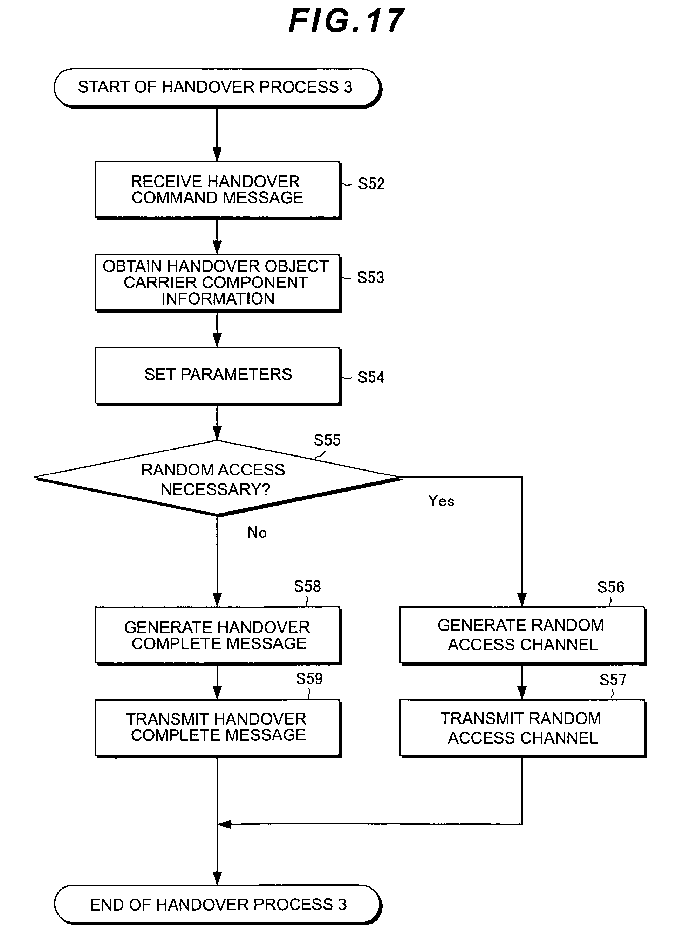

FIG. 17 is a flowchart showing an example of a handover processing procedure by the mobile station apparatus in FIG. 16. In receiving a handover command message, the mobile station apparatus receives the handover command message transmitted from a base station apparatus (step S52). Then, in obtaining handover object carrier component information, the mobile station apparatus confirms the contents of control of handover (step S53). Specifically, the mobile station apparatus recognizes the carrier component (source cell) of a handover source and the carrier component (target cell) of a handover destination, which are currently in carrier aggregation.

Herein, as in the first embodiment, the mobile station apparatus may determine the carrier component with which the mobile station apparatus has received the handover command message to be the source cell, and as in the second embodiment, source identification information included in the handover command message may explicitly specify the source cell. Then, in setting parameters, the mobile station apparatus switches the source cell to the target cell (step S54). Specifically, in order to receive downlink transmission signals from a base station apparatus that corresponds to the carrier component of the handover destination, the mobile station apparatus sets, to a reception device of the mobile station apparatus, parameters which are necessary for receiving signals via a physical channel, such as a reception frequency band and a bandwidth, and tries establishment of synchronization. Further, the mobile station apparatus determines whether or not the handover requires a random access procedure, based on information notified by the handover command message (step S55).

In step S55, the base station apparatus can make the mobile station apparatus determine, by one of the following methods, that a random access procedure is unnecessary. (1) To have the handover command message include a random access unnecessity identification. (2) To reserve a part of the numbers of dedicated preambles and specify the dedicated preamble number by the handover command message. (3) To specify, as the target cell and by the handover command message, a carrier component having the same CCID or a carrier component having the same cell ID in a different frequency band. (4) To specify, by the handover command message, the same mobile station apparatus ID as the currently used mobile station apparatus ID (C-RNTI). (5) The carrier component that corresponds to the target cell for which synchronization has been established with success is the same as one of the uplink carrier components currently used (In FIG. 5, at least in a case that, for the mobile station apparatus that is receiving signals with DL_CC3 and transmitting signals with UL_CC3, DL_CC4 is specified as the target cell.). In the case of (5), it is possible to recognize the frequency band of a corresponding uplink carrier component from broadcast information on the target cell, and it is also possible to have it included in the handover command message.

If the mobile station apparatus has determined that a random access procedure is necessary, the mobile station apparatus generates a random access channel after establishing synchronization (step S56). If a dedicated preamble sequence has been specified, the mobile station apparatus generates a random access channel, based on the preamble sequence. If a dedicated preamble sequence is not specified, the mobile station apparatus generates a random access channel, based on a preamble sequence that is selected at random. Then, the mobile station apparatus transmits the generated random access channel to the base station apparatus with the carrier component of the handover destination (step S57).

If the mobile station apparatus has determined that a random access procedure is unnecessary, the mobile station apparatus generates a handover complete message after establishing synchronization (step S58). Then, the mobile station apparatus transmits the generated handover complete message to the base station apparatus with the carrier component of the handover destination (step S59).

The flowchart in FIG. 17 is an example of a processing procedure by the mobile station apparatus, and a processing procedure other than this may be used as long as it is a method in which the mobile station apparatus recognizes the carrier components of the handover source and the handover destination from a received handover command message, further determines whether or not transmission of a random access channel is necessary, and executes either a handover procedure that needs a random access procedure or handover that does not need a random access procedure, based on a specified parameter.

According to the present embodiment, the base station apparatus notifies, to the mobile station apparatus, whether the handover is handover that needs a random access procedure or the handover is handover that needs a random access procedure. Further, based on instruction from the base station apparatus, the mobile station apparatus determines whether the handover needs a random access procedure or the handover does not need a random access procedure, and executes a handover procedure that is based on the determination.

According to the present embodiment, if it is unnecessary to transmit a random access channel in order to establish uplink synchronization, it is possible to omit the random access procedure and reduce momentary interruption of communication by shortening the processing time necessary for the handover procedure, and the communication quality is thereby improved. Further, the mobile station apparatus can reduce necessary power consumption at the time of handover by omitting a random access procedure.

### Fourth Embodiment

A fourth embodiment according to the present invention will be described below. In the first to third embodiments, handover procedures in which at least one of frequency bands which a mobile station apparatus is receiving does not change before and after a handover procedure, such as soft handover, have been described. However, comparison between all the reception qualities of respective carrier components in a carrier aggregation state and all the reception qualities of carrier components of respective frequency bands of neighboring base station apparatuses is extremely complicated, which may cause the calculation processing by the mobile station apparatus to become huge.

In this situation, in the present embodiment, a method that simplifies a handover procedure by limiting carrier components to be measured for determination of necessity of handover and further releasing a carrier aggregation state at the time of handover. A reception device and a transmission device of a mobile station apparatus and a reception device and a transmission of a base station apparatus in the present embodiment can be the same as those in the first embodiment. A network configuration in the present embodiment can be the same as that in FIG. 5.

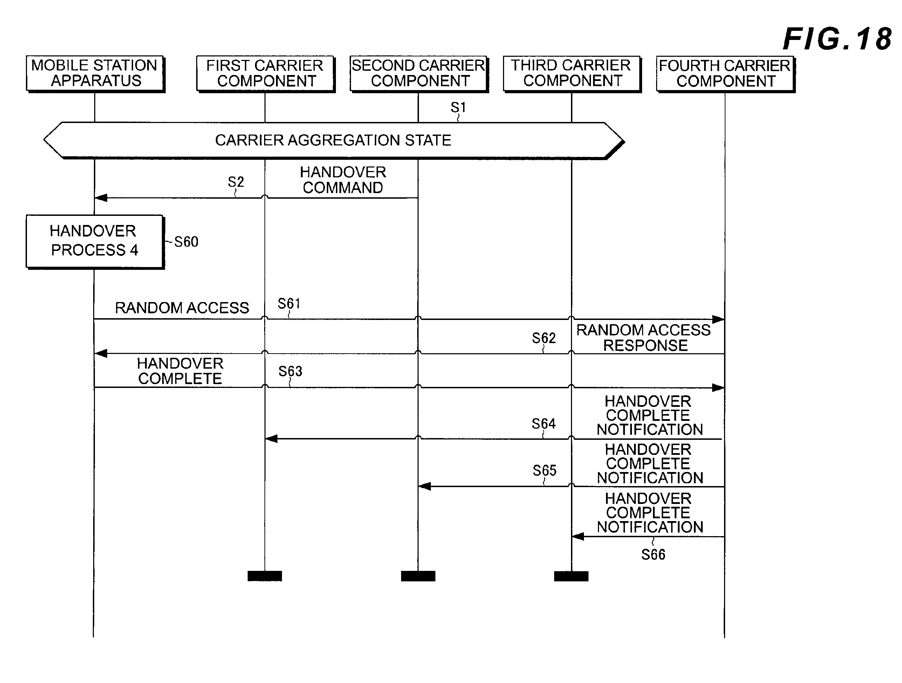

FIG. 18 is an example of a sequence showing a procedure by a mobile station apparatus that is in carrier aggregation and has received a handover command message, in the present embodiment, of executing handover up to completion of the handover. Description of the mobile station apparatus and carrier components in the figure is the same as that for FIGS. 6 and 7, and accordingly omitted. [0159] In order to reduce uplink resources necessary for measurement report messages and the amount of computation necessary for comparison of the reception qualities between carrier components, the mobile station apparatus in the present embodiment performs measurement report for handover, limiting it to one representative carrier component (hereinafter, referred to as a main carrier) instead of performing it for all the carrier components in a carrier aggregation state. The mobile station apparatus determines a main carrier by one of the following methods. (1) To individually specify a main carrier for each mobile station apparatus by a control message from a base station apparatus. (2) The maximum one or the minimum one among values unique to carrier components (cells). (3) The lowest frequency band or the highest frequency band among carrier components in carrier aggregation. (4) To specify measurement conditions dedicated to a main carrier by a control message from a base station apparatus.

In the method described in (2), unique values may be included in broadcast information, and cell IDs or global cell IDs may be used. With this limitation, for example, when five carrier components (cells) of the first to fifth carrier components are in carrier aggregation, there are conventionally ten combinations of comparison between the reception qualities of carrier components in carrier aggregation, however, the combinations can be reduced to four combinations by limiting it to combination between a main carrier and other carrier components.

The mobile station apparatus having received a handover command message (step S2) starts a handover process 4 (step S60). In the handover process 4, the mobile station apparatus obtains information (carrier component information) on a carrier component to be a handover object. The carrier component information includes at least frequency band information and a cell ID, and indicates a target cell. The base station apparatus does not need information on the carrier component (source cell) of the handover source, and accordingly, the handover command message is not made to include the information. The mobile station apparatus stops reception branches which are receiving transmission signals from a base station apparatus with any carrier component in a carrier aggregation state; operates a reception branch that corresponds to a base station apparatus with a newly instructed carrier component (target cell); starts receiving transmission signals from the base station apparatus with the newly instructed carrier component (target cell); and tries radio synchronization. The reception branch that receives transmission signals from the target cell does not need to be the reception branch having been receiving transmission signals from the source cell. If downlink carrier components and uplink carrier components are corresponding to each other in a one-to-one manner, the mobile station apparatus also stops the transmission branch that transmits transmission signals to the base station apparatus with the carrier component (source cell) of the handover source.

The mobile station apparatus having completed the radio synchronization subsequently operates the transmission branch that corresponds to the base station apparatus with the newly instructed carrier component (target cell), and transmits a random access channel to the base station apparatus that corresponds to the fourth carrier component (step S61). If a dedicated preamble sequence is specified by the handover command message, the preamble sequence is used. The base station apparatus, which corresponds to the fourth carrier component having detected the random access channel, transmits a random access response to the mobile station apparatus (step S62). The mobile station apparatus having received the random access response transmits a handover complete message to the base station apparatus that corresponds to the fourth carrier component (step S63).

The base station apparatus with the fourth carrier component notifies the fact that the handover has been normally completed, by a handover complete notification message to the base station apparatuses with the carrier components that were in carrier aggregation before the handover, and completes the procedure (step S64, step S65, step S66). FIG. 18 shows an example of transmitting a handover complete notification message to the respective carrier components. However, if all the carrier components which were in carrier aggregation before the handover are different frequency bands of the same base station apparatus, transmission of the handover complete notification message once is sufficient. It is possible that the base station apparatuses with carrier components of the handover destination and the handover source are the same base station apparatus.

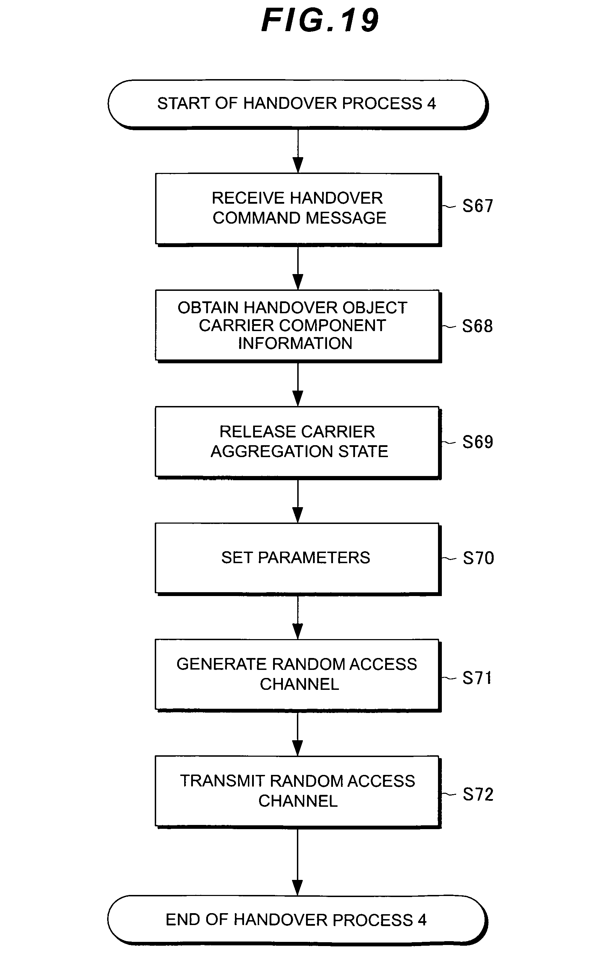

FIG. 19 is a flowchart showing an example of a handover processing procedure by the mobile station apparatus in FIG. 18. In receiving a handover command message, the mobile station apparatus receives a handover command message transmitted from a base station apparatus (step S67). Then, in obtaining handover object carrier component information, the mobile station apparatus confirms the contents of controlling handover (step S68). Specifically, the mobile station apparatus recognizes the carrier component (target cell) of the handover destination. Herein, the mobile station apparatus determines that all the carrier components in a carrier aggregation state with the carrier component of the handover source to be objects. Subsequently, in releasing carrier aggregation, the mobile station apparatus stops receiving transmission signals from any carrier component (cell) currently in carrier aggregation (step S69).

Then, in setting parameters, the mobile station apparatus performs switching from the source cell to the target cell (step S69). Specifically, in order to receive downlink transmission signals from a base station apparatus that corresponds to the carrier component of the handover destination, the mobile station apparatus sets, to the reception device of the mobile station apparatus, parameters necessary for receiving signals via a physical channel, such as a frequency band and a bandwidth, and tries establishment of synchronization (step S70).

When synchronization has been successfully established, the mobile station apparatus generates a random access channel (step S71). If a dedicated preamble sequence has been specified, the mobile station apparatus generates a random access channel, based on the preamble sequence. If a dedicated preamble sequence is not specified, the mobile station apparatus generates a random access channel, based on a preamble sequence that is selected at random. Then, the mobile station apparatus transmits the generated random access channel to the base station apparatus with the carrier component of the handover destination (step S72).

The flowchart in FIG. 19 is an example of a processing procedure by the mobile station apparatus, and a processing procedure other than this may be used as long as it is a method in which, after receiving a handover command message, the mobile station determines that it is necessary to release all carrier components currently in a carrier aggregation state and executes handover.

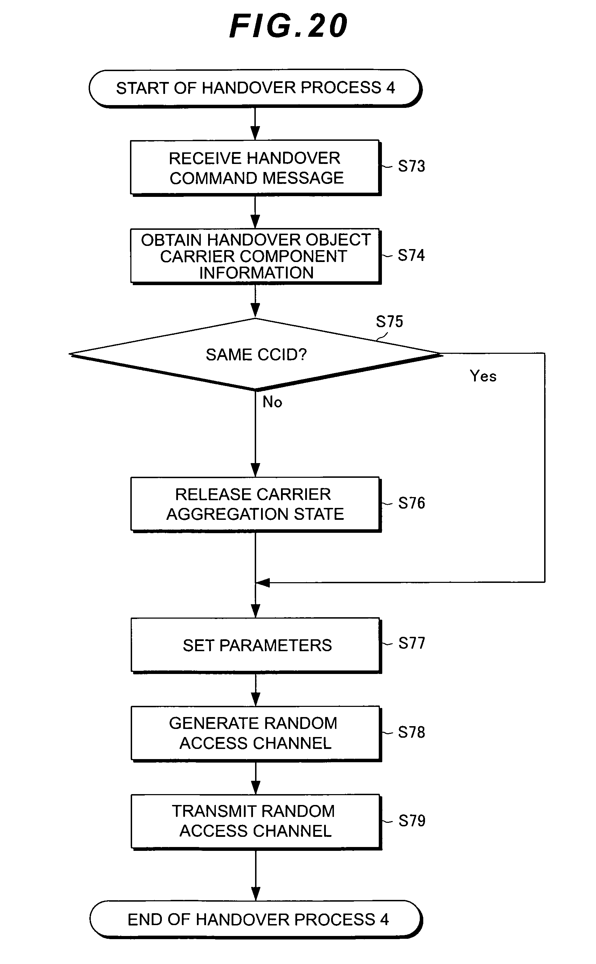

FIG. 20 shows an example of a modification of the handover process 4 in FIG. 19. A difference from FIG. 19 is that a process of determination of a same CCID is added. In receiving a handover command message, a mobile station apparatus receives a handover command message transmitted from a base station apparatus (step S73). Then, in obtaining a handover object carrier component information, the mobile station apparatus confirms the contents of controlling handover (step S74). Specifically, the mobile station apparatus recognizes the carrier component (target cell) and the CCID of a handover destination. Then, in determining the same CCID, the mobile station apparatus determines whether the CCID of the carrier component (target cell) of the handover destination recognized by obtaining the handover object carrier component information is the same as the CCID of carrier components currently in carrier aggregation (step S75).

In step S75, if the CCID is different, then the mobile station apparatus stops receiving transmission signals from any carrier component (cell) currently in carrier aggregation in releasing carrier aggregation (step S76). The process (steps S77 to S79) thereafter is the same as steps S70 to step S72 in FIG. 19. If the CCID is the same, the mobile station apparatus determines that the handover is a handover which maintains the carrier aggregation state where one carrier component in the carrier aggregation state is the source cell. Then, the mobile station apparatus recognizes the carrier component (source cell) of the handover source, using the method in the first embodiment or the second embodiment. The process thereafter (steps S77 to S79) is the same as the steps S70 to S72 in FIG. 19. Incidentally, in case that the CCIDs are the same, it is also possible to apply a method that omits a random access procedure as in the third embodiment (not shown).

According to the present embodiment, a mobile station apparatus can significantly reduce the amount of computation for comparison between the reception qualities of respective carrier components. Further, even in a case that the mobile station apparatus is receiving a plurality of frequency bands in a carrier aggregation state, a base station apparatus can reduce the amount of information on signaling because the base station apparatus does not need to have a handover command message including information on carrier components which stop receiving of signals after handover. Still further, as the base station apparatus does not need to have the handover command message including information on a carrier component that transmits a handover complete message, the base station apparatus can reduce the amount of information on signaling.

In the foregoing embodiments, a mobile station apparatus and a base station apparatus may be controlled by recording a program that realizes the functions or a part of the functions of the respective sections of the mobile station apparatus and the base station apparatus in a computer-readable storage medium, having a computer system read the program recorded in this recording medium and execute the program. A 'computer system' referred to herein is assumed to include hardware, such as an OS, peripheral units, and the like. Further, a 'computer-readable storage medium' refers to a storage device, such as a flexible disk, a magneto-optical disk, a portable medium such as an ROM, a CD-ROM, or the like, a hard disk built in a computer system, and the like. Further, it is assumed that 'computer readable storage media' include ones that dynamically hold a program for a short time, such as a communication line applied to transmission of a program via a network, for example, the Internet, a telephone line, and the like, and ones, in such a case, that hold a program for a predetermined time, such as a volatile memory in a computer system to be a server or a client. Further, the above-described program may be one for realizing a part of the above-described functions, and may be one that realizes the above-described functions by a combination with a program that is already recorded in a computer system.

Embodiments according to the present invention have been described above in detail, referring to the drawings, but specific configuration is not limited to these embodiments, and designs and the like in a scope without departing from the spirit of the invention is also included in the scope of claims.

### Reference Numerals

- 1-1, 1-2...: (transmission and reception)
- 2-1, 2-2: DUP
- 3-1, 3-2: radio reception section
- 4-1 to 4-4: orthogonal demodulator
- 5-1 to 5-4: baseband demodulation section
- 6: demapping section
- 7: mapping section
- 8: transmission/reception band setting section
- 9: transmission signal processing control section
- 10: reception signal processing control section
- 11: random access generation section
- 12: control message processing section
- 13-1, 13-2: radio transmission section
- 14-1 to 14-4: orthogonal modulator
- 15-1 to 15-4: baseband modulation section
- 16: handover control section
- 17: uplink control message generation section
- 18: measurement processing section
- 20: antenna
- 21: reception section
- 22: reception signal processing control section
- 23: reception signal processing section
- 24: uplink message processing section
- 25: random access processing section
- 26: inter-base-station message processing section
- 31: aggregation determination section
- 32: handover determination section
- 33: downlink message generation section
- 34: transmission signal processing section
- 35: transmission signal processing control section
- 36: channel mapping section
- 37: transmission band setting section
- 38-1 to 38-n: transmission section
- 39: inter-base-station message generation section
- 40-1 to 40-n: antenna

## Claims

1. A mobile station apparatus that receives transmission signals in a plurality of frequency bands which are transmitted from one or more base station apparatus/apparatuses and are different from each other, the mobile station apparatus comprising:
a plurality of reception branches that performs a reception process for each of said frequency bands; and
a reception-signal processing control section that performs control of switching a reception branch in operation to a reception branch that corresponds to a frequency band of a handover destination indicated by a handover command message that has been received from said base station apparatus and indicates a start of handover,
wherein said mobile station apparatus performs handover by:
stopping a reception branch that corresponds to a frequency band of a handover source indicated by said handover command message; and
operating the reception branch that corresponds to the frequency band of the handover destination indicated by the handover command message.

2. The mobile station apparatus according to claim 1, wherein said mobile station apparatus determines that a frequency band which corresponds to a reception branch having received said handover command message is the frequency band of the handover source.

3. The mobile station apparatus according to claim 1, wherein, based on said handover command message, said mobile station apparatus determines that one of the frequency bands other than the frequency band which corresponds to the reception branch having received the handover command message is the frequency band of the handover source.

4. The mobile station apparatus according to any of claims 1 to 3, wherein said mobile station apparatus transmits a handover complete message indicating completion of handover, in a frequency band indicated by said handover command message.

5. The mobile station apparatus according to any of claims 1 to 3, wherein said mobile station apparatus transmits a handover complete message indicating completion of handover, in a frequency band indicated by control information included in a response of a random access channel.

6. The mobile station apparatus according to claim 1, wherein said mobile station apparatus determines that a frequency band where all of said reception branches are receiving a transmission signal is a frequency band of the handover source.

7. The mobile station apparatus according to any of claims 1 to 4,
wherein, based on said handover command message, said mobile station apparatus determines whether transmission of a random access channel is necessary at handover, and
wherein, as a result of said determination, if transmission of the random access channel is unnecessary, then said mobile station apparatus performs handover, omitting a random access procedure, and if transmission of the random access channel is necessary, then said mobile station apparatus performs handover with a random access procedure.

8. A base station apparatus that performs radio communication with a mobile station apparatus that receives transmission signals in a plurality of frequency bands different from each other,
wherein said base station apparatus transmits, to a mobile station apparatus having transmitted a measurement report message indicating that a handover condition has been satisfied, a handover command message which indicates a start of handover and which includes control information specifying a downlink frequency band of a handover destination and control information specifying an uplink frequency band for transmitting a handover complete message that notifies completion of handover.

9. The base station apparatus according to claim 8,
wherein said base station apparatus determines whether or not a random access procedure is necessary for the mobile station apparatus having transmitted the measurement report message indicating that a handover condition has been satisfied, and, based on said determination, transmits, to said mobile station apparatus, the handover command message which indicates a start of handover and which includes control information specifying whether or not the random access procedure is necessary.

10. The base station apparatus according to claim 9,
wherein said base station apparatus notifies said mobile station apparatus of unnecessity of a random access procedure, by having the handover command message include a random access unnecessity identifier.

11. The base station apparatus according to claim 9,
wherein said base station apparatus reserves a part of dedicated preamble numbers, specifies said dedicated preamble number by the handover command message, and thereby notifies said mobile station apparatus of unnecessity of a random access procedure.

12. The base station apparatus according to claim 9,
wherein said base station apparatus has the handover command message include the same frequency identifier as a frequency identifier allocated to a downlink frequency band that said mobile station apparatus is receiving, and thereby notifies said mobile station apparatus of unnecessity of a random access procedure.

13. The base station apparatus according to claim 9,
wherein said base station apparatus has the handover command message include the same mobile station apparatus ID as a mobile station apparatus ID that said mobile station apparatus is using, and thereby notifies said mobile station apparatus of unnecessity of a random access procedure.

14. The base station apparatus according to claim 9,
wherein said base station apparatus specifies, by the handover command message, the same uplink frequency band as one of uplink frequency bands that said mobile station apparatus has been accessing before the handover, and thereby notifies said mobile station apparatus of unnecessity of a random access procedure.

15. A handover method for a mobile station apparatus that receives transmission signals in a plurality of frequency bands which are transmitted from one or more base station apparatus/apparatuses and are different from each other, the method comprising the steps of:
performing control of switching a reception branch in operation among a plurality of reception branches that performs a reception process for each of said frequency bands, to a reception branch that corresponds to a frequency band of a handover destination indicated by a handover command message that has been received from said base station apparatus and indicates a start of handover;
stopping the reception branch that corresponds to the frequency band of the handover destination indicated by said handover command message; and
operating the reception branch that corresponds to the frequency band of the handover destination indicated by the handover command message to thereby perform handover.

16. A mobile communication system, comprising:
said mobile station apparatus according to claim 1; and
said base station apparatus according to claim 8.
